(19)

Europäisches
Patentamt
European
Patent Office
Office européen
des brevets

(11) **EP 4 513 776 A1**

(12) **EUROPEAN PATENT APPLICATION**
published in accordance with Art. 153(4) EPC

(43) Date of publication:
**26.02.2025 Bulletin 2025/09**

(21) Application number: **23802647.0**

(22) Date of filing: **25.04.2023**

(51) International Patent Classification (IPC):
*H04B 7/0452* (2017.01)

(52) Cooperative Patent Classification (CPC):
**H04B 7/0452; H04L 25/03**

(86) International application number:
**PCT/CN2023/090608**

(87) International publication number:
**WO 2023/216873 (16.11.2023 Gazette 2023/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.05.2022 CN 202210514645**

(71) Applicant: **Huawei Technologies Co., Ltd.**
**Shenzhen, Guangdong 518129 (CN)**

(72) Inventors:
• WANG, Fan
  Shenzhen, Guangdong 518129 (CN)
• ZHANG, Zhang
  Shenzhen, Guangdong 518129 (CN)

(74) Representative: **Gill Jennings & Every LLP**
**The Broadgate Tower**
**20 Primrose Street**
**London EC2A 2ES (GB)**

(54) **SIGNAL TRANSMISSION METHOD AND DEVICE**

(57) This application provides a signal transmission method and an apparatus. In the method, a terminal device receives first indication information, where the first indication information is for determining at least one of a mapping parameter and a widely linear processing matrix; and the terminal device sends a second signal, where the second signal is obtained by converting a first signal based on at least one of the mapping parameter and the widely linear processing matrix, and the first signal includes $m$ streams of first data to be sent. The mapping parameter includes a first mapping parameter of the $m$ streams of first data and a second mapping parameter of conjugates of the $m$ streams of first data, and the widely linear processing matrix includes a first widely linear processing matrix of $m$ streams of second data and a second widely linear processing matrix of conjugates of the $m$ streams of second data. The second signal is obtained by converting the $m$ streams of first data and the conjugates of the $m$ streams of first data based on at least one of the mapping parameter and the widely linear processing matrix. In this way, a degree of freedom of the second signal can be improved, thereby improving a capability of a network device to resist multi-user interference.

Signal transmission method 100

S101. Send first indication information, where the first indication information is for determining at least one of a mapping parameter and a widely linear processing matrix

S102. Receive the first indication information

S103. Send a second signal, where the second signal is obtained by converting a first signal based on at least one of the mapping parameter and the widely linear processing matrix, and the first signal includes m streams of first data to be sent by the terminal device

S104. Receive the second signal

FIG. 3

**Description**

**CROSS-REFERENCE TO RELATED APPLICATIONS**

This application claims priority to Chinese Patent Application No. 202210514645.1, filed with the China National Intellectual Property Administration on May 12, 2022 and entitled "SIGNAL TRANSMISSION METHOD AND APPARATUS", which is incorporated herein by reference in its entirety.

**TECHNICAL FIELD**

This application relates to the field of communication technologies, and in particular, to a signal transmission method and an apparatus.

**BACKGROUND**

A multiple-input multiple-output (multiple-input multiple-output, MIMO) technology means that a transmitting end and a receiving end use a plurality of transmit antennas and a plurality of receive antennas, respectively, to transmit and receive signals, thereby improving spectral efficiency.

For single-user multiple input multiple output (single-user multiple input multiple output, SU-MIMO), a quantity of antennas of a terminal device is limited. Therefore, compared with an ordinary quantity of antennas configured by a base station, a larger quantity of antennas configured by the base station leads to a smaller spectral efficiency gain. For multi-user multiple input multiple output (multi-user multiple input multiple output, MU-MIMO), a base station can use spatial multiple-antenna processing to resist multi-user interference, so that a large quantity of users can perform transmission at the same time. That is, MU-MIMO can effectively improve a multi-user capacity. It can be learned that in MU-MIMO, the base station can effectively improve spectral efficiency by configuring a large quantity of antennas.

Therefore, in uplink communication of MU-MIMO, how to improve a capability of a base station to resist multi-user interference is still one of problems that urgently need to be studied currently.

**SUMMARY**

Embodiments of this application provide a signal transmission method and an apparatus, to help improve a capability of a network device to resist multi-user interference.

According to a first aspect, an embodiment of this application provides a signal transmission method. In the method, a terminal device receives first indication information, where the first indication information is for determining at least one of a mapping parameter and a widely linear processing matrix; and the terminal device sends a second signal, where the second signal is obtained by converting a first signal based on at least one of the mapping parameter and the widely linear processing matrix, and the first signal includes $m$ streams of first data to be sent by the terminal device.

The mapping parameter includes a first mapping parameter of the $m$ streams of first data and a second mapping parameter of conjugates of the $m$ streams of first data, and the widely linear processing matrix includes a first widely linear processing matrix of $m$ streams of second data and a second widely linear processing matrix of conjugates of the $m$ streams of second data. $m$ is an integer greater than or equal to 1.

It can be learned that in this embodiment of this application, the second signal sent by the terminal device is obtained by converting the $m$ streams of first data in the to-be-sent first signal and the conjugates of the $m$ streams of first data based on at least one of the mapping parameter and the widely linear processing matrix, so that a degree of freedom of the second signal can be improved, thereby improving a capability of a network device to resist multi-user interference.

In an optional implementation, when the first indication information is for determining the widely linear processing matrix, the widely linear processing matrix is for performing widely linear processing on the $m$ streams of first data in the first signal and the conjugates of the $m$ streams of first data. Therefore, the $m$ streams of second data are the $m$ streams of first data

In another optional implementation, when the first indication information is for determining the mapping parameter and the widely linear processing matrix, the mapping parameter is for mapping the $m$ streams of first data and the conjugates of the $m$ streams of first data, and the widely linear processing matrix is for performing widely linear processing on mapped data and a conjugate of the mapped data. Therefore, the $m$ streams of second data are $m$ streams of data obtained by mapping the $m$ streams of first data and the conjugates of the $m$ streams of first data based on the first mapping parameter and the second mapping parameter.

In an optional implementation, the first signal is a proper Gaussian signal, and the second signal is an improper Gaussian signal. The proper Gaussian signal is a signal that meets independent co-distribution of an I channel and a Q channel, or a signal whose pseudo covariance is zero. In this case, the improper Gaussian signal is a signal that meets non-independent co-distribution of an I channel and a Q channel, or a signal whose pseudo covariance is not zero.

When the first signal is a proper Gaussian signal, and the second signal is an improper Gaussian signal, the terminal device converts the first signal having a proper Gaussian feature into the second signal having no proper Gaussian feature. In this way, the sent second signal has a feature that the I channel and the Q channel are not independently co-distributed, or a pseudo covariance of the second signal is not zero, so that the degree of freedom of the second signal is improved, thereby improving the capability of the network device to resist the multi-user interference.

Optionally, both the first signal and the second signal are improper Gaussian signals. When the first signal is an improper Gaussian signal, the terminal device processes the first signal and a conjugate of the first signal by using at least one of the mapping parameter and the widely linear processing matrix, to obtain the second signal that still has an improper Gaussian feature. The terminal device may enhance the improper Gaussian feature of the second signal by converting the first signal, so that the degree of freedom of the second signal can be improved, thereby improving the capability of the network device to resist the multi-user interference.

In an optional implementation, the first indication information includes first amplitude information and phase information. The first amplitude information indicates amplitude information of the first mapping parameter, indicates amplitude information of the second mapping parameter, or indicates a relative relationship between amplitude information of the first mapping parameter and amplitude information of the second mapping parameter. The phase information indicates phase information of the first mapping parameter and phase information of the second mapping parameter.

When the first amplitude information indicates the amplitude information of the first mapping parameter, the terminal device may determine the amplitude information of the second mapping parameter according to a normalization processing rule. Similarly, when the first amplitude information indicates the amplitude information of the second mapping parameter, the terminal device may determine the amplitude information of the first mapping parameter according to the normalization processing rule. When the first amplitude information indicates the relative relationship between the amplitude information of the first mapping parameter and the amplitude information of the second mapping parameter, the terminal device may determine the amplitude information of the first mapping parameter and the amplitude information of the second mapping parameter based on transmit power and the relative relationship.

It can be learned that the terminal device may determine the amplitude information of the first mapping parameter and the amplitude information of the second mapping parameter based on the first amplitude information in the first indication information. In addition, the terminal device may further determine the phase information of the first mapping parameter and the phase information of the second mapping parameter based on the phase information in the first indication information. Therefore, the terminal device may determine the first mapping parameter and the second mapping parameter based on the first indication information.

In an optional implementation, the phase information includes first phase information and second phase information. The first phase information indicates the phase information of the first mapping parameter, and the second phase information indicates the phase information of the second mapping parameter. Therefore, the terminal device may determine the phase information of the first mapping parameter and the phase information of the second mapping parameter from the first indication information and the second phase information, respectively.

Optionally, the first phase information indicates reference phase information, and the second phase information indicates differential phase information. The terminal device determines, based on the amplitude information of the first mapping parameter, the amplitude information of the second mapping parameter, and the reference phase information, that the reference phase information is the phase information of the first mapping parameter, and then determines the phase information of the second mapping parameter based on the reference phase information and the differential phase information. Alternatively, the terminal device determines, based on the amplitude information of the first mapping parameter, the amplitude information of the second mapping parameter, and the reference phase information, that the reference phase information is the phase information of the second mapping parameter, and then determines the phase information of the first mapping parameter based on the reference phase information and the differential phase information.

It can be learned that the terminal device may determine the phase information of the first mapping parameter and the phase information of the second mapping parameter based on the amplitude information of the first mapping parameter, the amplitude information of the second mapping parameter, the reference phase information, and the differential phase information.

In another optional implementation, at least two of phase information of the first mapping parameter, phase information of the second mapping parameter, amplitude information of the first mapping parameter, and amplitude information of the second mapping parameter are jointly encoded in the first indication information.

In this manner, the terminal device may jointly determine at least two of the phase information of the first mapping parameter, the phase information of the second mapping parameter, the amplitude information of the first mapping parameter, and the amplitude information of the second mapping parameter based on some information in the first indication information.

In an optional implementation, the first indication information includes codebook index information and second amplitude information, where The codebook index information indicates a codebook index, and the codebook index is for determining the first widely linear processing matrix and the second widely linear processing matrix. The second amplitude information indicates at least one of an amplitude of the first widely linear processing matrix and an amplitude of the second widely linear processing matrix.

In this manner, the terminal device may determine the first widely linear processing matrix and the second widely linear processing matrix based on the codebook index information and the second amplitude information in the first indication information.

In an optional implementation, when the first indication information is for determining the first mapping parameter, the second mapping parameter, the first widely linear processing matrix, and the second widely linear processing matrix, the second signal is obtained by the terminal device by performing widely linear processing on $m$ streams of third data and conjugates of the $m$ streams of third data based on the first widely linear processing matrix and the second widely linear processing matrix; and the $m$ streams of third data are obtained by the terminal device by mapping the $m$ streams of first data and the conjugates of the $m$ streams of first data based on the first mapping parameter and the second mapping parameter.

It can be learned that when the first indication information is for determining the first mapping parameter, the second mapping parameter, the first widely linear processing matrix, and the second widely linear processing matrix, the terminal device maps the $m$ streams of first data and the conjugates of the $m$ streams of first data based on the first mapping parameter and the second mapping parameter, to obtain the $m$ streams of third data. The terminal device performs widely linear processing on the $m$ streams of third data and the conjugates of the $m$ streams of third data based on the first widely linear processing matrix and the second widely linear processing matrix, to obtain the second signal.

In another optional implementation, when the first indication information is for determining the first mapping parameter and the second mapping parameter, the second signal is obtained by the terminal device by precoding $m$ streams of third data. The $m$ streams of third data are obtained by the terminal device by mapping the $m$ streams of first data and the conjugates of the $m$ streams of first data based on the first mapping parameter and the second mapping parameter.

It can be learned that when the first indication information is for determining the first mapping parameter and the second mapping parameter, the terminal device maps the $m$ streams of first data and the conjugates of the $m$ streams of first data based on the first mapping parameter and the second mapping parameter, to obtain the $m$ streams of third data. The terminal device precodes the $m$ streams of third data to obtain the second signal. In this manner, the terminal device does not need to perform widely linear processing, so that processing complexity can be reduced. However, the second signal is still obtained by converting the $m$ streams of first data in the first signal and the conjugates of the $m$ streams of first data. Therefore, the degree of freedom of the second signal can still be improved, and the capability of the network device to resist the multi-user interference can still be improved.

In still another optional implementation, when the first indication information is for determining the first widely linear processing matrix and the second widely linear processing matrix, the second signal is obtained by performing widely linear processing on the m streams of first data and the conjugates of the $m$ streams of first data based on the first widely linear processing matrix and the second widely linear processing matrix.

It can be learned that, when the first indication information is for determining the first widely linear processing matrix and the second widely linear processing matrix, the terminal device may directly perform widely linear processing on the $m$ streams of first data and the conjugates of the $m$ streams of first data based on the first widely linear processing matrix and the second widely linear processing matrix, to obtain the second signal, thereby improving the degree of freedom of the second signal, and helping improve the capability of the network device to resist the multi-user interference. In this implementation, the terminal device does not need to perform mapping processing, so that processing complexity can also be reduced.

According to a second aspect, this application further provides a signal transmission method. The signal transmission method in this aspect corresponds to the signal transmission method in the first aspect, and the signal transmission method in this aspect is described from a network device side. In the method, a network device sends first indication information, where the first indication information is for determining at least one of a mapping parameter and a widely linear processing matrix.

The network device receives a second signal, where the second signal is obtained by converting a first signal based on at least one of the mapping parameter and the widely linear processing matrix, and the first signal includes $m$ streams of first data to be sent by a terminal device.

The mapping parameter includes a first mapping parameter of the $m$ streams of first data and a second mapping parameter of conjugates of the $m$ streams of first data. The widely linear processing matrix includes a first widely linear processing matrix of $m$ streams of second data and a second widely linear processing matrix of conjugates of the $m$ streams of second data. $m$ is an integer greater than or equal to 1.

It can be learned that in this embodiment of this application, the second signal received by the network device is obtained by the terminal device by converting the $m$ streams of first data in the to-be-sent first signal of the terminal device and the conjugates of the $m$ streams of first data based on at least one of the mapping parameter and the widely linear processing matrix. In this way, a degree of freedom of the second signal can be improved, so that a capability of the network device to resist multi-user interference can be improved.

**In** an optional implementation, when the first indication information is for determining the widely linear processing matrix, the widely linear processing matrix is for performing widely linear processing on the $m$ streams of first data in the first signal and the conjugates of the $m$ streams of first data. Therefore, the $m$ streams of second data are the $m$ streams of first data.

**In** another optional implementation, when the first indication information is for determining the mapping parameter and the widely linear processing matrix, the mapping parameter is for mapping the m streams of first data and the conjugates of the $m$ streams of first data, and the widely linear processing matrix is for performing widely linear processing on mapped data and a conjugate of the mapped data. Therefore, the $m$ streams of second data are $m$ streams of data obtained by mapping the $m$ streams of first data and the conjugates of the $m$ streams of first data based on the first mapping parameter and the second mapping parameter.

**In** an optional implementation, the first signal is a proper Gaussian signal, and the second signal is an improper Gaussian signal. The proper Gaussian signal is a signal that meets independent co-distribution of an I channel and a Q channel, or a signal whose pseudo covariance is zero. In this case, the improper Gaussian signal is a signal that meets non-independent co-distribution of an I channel and a Q channel, or a signal whose pseudo covariance is not zero.

Optionally, both the first signal and the second signal are improper Gaussian signals.

**In** an optional implementation, the first indication information includes first amplitude information and phase information. The first amplitude information indicates amplitude information of the first mapping parameter, indicates amplitude information of the second mapping parameter, or indicates a relative relationship between amplitude information of the first mapping parameter and amplitude information of the second mapping parameter. The phase information indicates phase information of the first mapping parameter and phase information of the second mapping parameter.

It can be learned that the network device indicates, to the terminal device based on the first indication information, the amplitude information of the first mapping parameter, the amplitude information of the second mapping parameter, or the relative relationship between the amplitude information of the first mapping parameter and the amplitude information of the second mapping parameter, and the phase information of the first mapping parameter and the phase information of the second mapping parameter. This manner helps the terminal device determine the first mapping parameter and the second mapping parameter based on the first indication information.

In an optional implementation, the phase information includes first phase information and second phase information. The first phase information indicates the phase information of the first mapping parameter, and the second phase information indicates the phase information of the second mapping parameter. It can be learned that the network device may indicate the phase information of the first mapping parameter and the phase information of the second mapping parameter to the terminal device by using the first phase information and the second phase information, respectively.

Optionally, the first phase information indicates reference phase information, and the second phase information indicates differential phase information. It can be learned that the network device may further indicate the reference phase information and the differential phase information to the terminal device by using the first phase information and the second phase information, respectively. This manner helps the terminal device determine the phase information of the first mapping parameter and the phase information of the second mapping parameter based on the reference phase information and the differential phase information.

In another optional implementation, at least two of phase information of the first mapping parameter, phase information of the second mapping parameter, amplitude information of the first mapping parameter, and amplitude information of the second mapping parameter are jointly encoded in the first indication information.

It can be learned that the network device may jointly encode at least two of the phase information of the first mapping parameter, the phase information of the second mapping parameter, the amplitude information of the first mapping parameter, and the amplitude information of the second mapping parameter in the first indication information, so that the terminal device jointly determines the at least two of the phase information of the first mapping parameter, the phase information of the second mapping parameter, the amplitude information of the first mapping parameter, and the amplitude information of the second mapping parameter based on some information in the first indication information.

In an optional implementation, the first indication information includes codebook index information and second amplitude information, where The codebook index information indicates a codebook index, and the codebook index is for determining the first widely linear processing matrix and the second widely linear processing matrix. The second amplitude information indicates at least one of an amplitude of the first widely linear processing matrix and an amplitude of the second widely linear processing matrix.

It can be learned that the network device may further indicate, to the terminal device by using the codebook index information and the second amplitude information in the first indication information, information for determining the first widely linear processing matrix and the second widely linear processing matrix, so that the terminal device can determine the first widely linear processing matrix and the second widely linear processing matrix.

According to a third aspect, this application further provides a communication apparatus. The communication apparatus has a part or all of functions implementing the terminal device in the first aspect, or has a part or all of functions implementing the network device in the second aspect. For example, functions of the communication apparatus may be functions of some or all of embodiments of the terminal device in the first aspect of this application, or may be functions of independently implementing any embodiment of this application. The function may be implemented by hardware, or may be implemented by hardware executing corresponding software. The hardware or the software includes one or more units or modules corresponding to the functions.

In a possible design, a structure of the communication apparatus may include a processing unit and a communication unit. The processing unit is configured to support the communication apparatus in performing a corresponding function in the foregoing methods. The communication unit is configured to support communication between the communication apparatus and another communication apparatus. The communication apparatus may further include a storage unit. The storage unit is configured to be coupled to the processing unit and the communication unit, and stores program instructions and data that are necessary for the communication apparatus.

In an implementation, the communication apparatus includes a processing unit and a communication unit, and the processing unit is configured to control the communication unit to perform data/signaling receiving and sending.

The communication unit is configured to receive first indication information, where the first indication information is for determining at least one of a mapping parameter and a widely linear processing matrix.

The communication unit is further configured to send a second signal, where the second signal is obtained by a terminal device by converting a first signal based on at least one of the mapping parameter and the widely linear processing matrix, and the first signal includes $m$ streams of first data to be sent by the terminal device.

The mapping parameter includes a first mapping parameter of the $m$ streams of first data and a second mapping parameter of conjugates of the $m$ streams of first data, the widely linear processing matrix includes a first widely linear processing matrix of $m$ streams of second data and a second widely linear processing matrix of conjugates of the $m$ streams of second data, and $m$ is an integer greater than or equal to 1.

*In* addition, for another optional implementation of the communication apparatus in this aspect, refer to related content of the first aspect. Details are not described herein again.

*In* another implementation, the communication apparatus includes a processing unit and a communication unit, and the processing unit is configured to control the communication unit to perform data/signaling receiving and sending.

The communication unit is configured to send first indication information, where the first indication information is for determining at least one of a mapping parameter and a widely linear processing matrix.

The communication unit is further configured to receive a second signal, where the second signal is obtained by converting a first signal based on at least one of the mapping parameter and the widely linear processing matrix, and the first signal includes $m$ streams of first data to be sent by a terminal device.

The mapping parameter includes a first mapping parameter of the $m$ streams of first data and a second mapping parameter of conjugates of the $m$ streams of first data, the widely linear processing matrix includes a first widely linear processing matrix of $m$ streams of second data and a second widely linear processing matrix of conjugates of the $m$ streams of second data, and $m$ is an integer greater than or equal to 1.

In addition, for another optional implementation of the communication apparatus in this aspect, refer to related content of the second aspect. Details are not described herein again.

In an example, the communication unit may be a transceiver or a communication interface, the storage unit may be a memory, and the processing unit may be a processor.

In an implementation, the communication apparatus includes a processor and a transceiver. The processor is configured to control the transceiver to perform data/signaling receiving and sending.

The transceiver is configured to receive first indication information, where the first indication information is for determining at least one of a mapping parameter and a widely linear processing matrix.

The transceiver is further configured to send a second signal, where the second signal is obtained by a terminal device by converting a first signal based on at least one of the mapping parameter and the widely linear processing matrix, and the first signal includes $m$ streams of first data to be sent by the terminal device.

The mapping parameter includes a first mapping parameter of the $m$ streams of first data and a second mapping parameter of conjugates of the $m$ streams of first data, the widely linear processing matrix includes a first widely linear processing matrix of $m$ streams of second data and a second widely linear processing matrix of conjugates of the $m$ streams of second data, and $m$ is an integer greater than or equal to 1.

In addition, for another optional implementation of the uplink communication apparatus in this aspect, refer to related content of the first aspect. Details are not described herein again.

In another implementation, the communication apparatus includes a processor and a transceiver. The processor is configured to control the transceiver to perform data/signaling receiving and sending.

The transceiver is configured to send first indication information, where the first indication information is for determining at least one of a mapping parameter and a widely linear processing matrix.

The transceiver is further configured to receive a second signal, where the second signal is obtained by converting a first signal based on at least one of the mapping parameter and the widely linear processing matrix, and the first signal includes $m$ streams of first data to be sent by a terminal device.

The mapping parameter includes a first mapping parameter of the m streams of first data and a second mapping parameter of conjugates of the $m$ streams of first data, the widely linear processing matrix includes a first widely linear processing matrix of $m$ streams of second data and a second widely linear processing matrix of conjugates of the $m$ streams of second data, and $m$ is an integer greater than or equal to 1.

In addition, for another optional implementation of the communication apparatus in this aspect, refer to related content of the second aspect. Details are not described herein again.

In another implementation, the communication apparatus is a chip or a chip system. The processing unit may also be represented as a processing circuit or a logic circuit. The communication unit may be an input/output interface, an interface circuit, an output circuit, an input circuit, a pin, a related circuit, or the like on the chip or the chip system.

In an implementation process, the processor may be configured to perform, for example, but not limited to, baseband-related processing; and the transceiver may be configured to perform, for example, but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of an integrated circuit technology, increasingly more components may be integrated on a same chip. For example, the digital baseband processor and a plurality of application processors (for example, but not limited to, a graphics processing unit and a multimedia processor) may be integrated on a same chip. Such a chip may be referred to as a system-on-a-chip (system on a chip, SoC). Whether the components are separately disposed on different chips or integrated and disposed on one or more chips usually depends on a requirement of a product design. This embodiment of this application imposes no limitation on specific implementations of the foregoing components.

According to a fourth aspect, this application further provides a processor, configured to perform the foregoing methods. In a process of performing these methods, a process of sending the foregoing information and a process of receiving the foregoing information in the foregoing methods may be understood as a process of outputting the foregoing information by the processor and a process of receiving the foregoing input information by the processor. When outputting the information, the processor outputs the information to a transceiver, so that the transceiver transmits the information. After the information is outputted by the processor, other processing may further need to be performed on the information before the information arrives at the transceiver. Similarly, during receiving of the input information by the processor, the transceiver receives the information, and inputs the information to the processor. Further, after the transceiver receives the foregoing information, other processing may need to be performed on the information before the information is inputted into the processor.

Based on the foregoing principle, for example, receiving the first indication information mentioned in the foregoing method may be understood as inputting the first indication information by the processor.

Unless otherwise specified, operations such as sending and receiving related to the processor may be more generally understood as operations such as output, receiving, and input of the processor if the operations do not conflict with actual functions or internal logic of the operations in related descriptions, instead of operations such as sending and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (read only memory, ROM). The memory and the processor may be integrated on a same chip, or may be separately disposed on different chips. A type of the memory and a manner of disposing the memory and the processor are not limited in this embodiment of this application.

According to a fifth aspect, this application further provides a communication system. The system includes at least one network device and at least two terminal devices in the foregoing aspects. In another possible design, the system may further include another device that interacts with the network device and the terminal device in the solutions provided in this application.

According to a sixth aspect, this application provides a computer-readable storage medium, configured to store instructions. When the instructions are run by a computer, the method according to either of the first aspect and the second aspect is implemented.

According to a seventh aspect, this application further provides a computer program product including instructions. When the computer program product runs on a computer, the method according to either of the first aspect and the second aspect is implemented.

According to an eighth aspect, this application provides a chip system. The chip system includes a processor and an interface. The interface is configured to obtain a program or instructions. The processor is configured to invoke the program or the instructions to implement or support a terminal device in implementing a function in the first aspect, or is configured to invoke the program or the instructions to implement or support a network device in implementing a function in the second aspect, for example, determining or processing at least one of data and information in the foregoing method. In a possible design, the chip system further includes a memory. The memory is configured to store program instructions and data that are necessary for a terminal. The chip system may include a chip, or may include a chip and another discrete component.

According to a ninth aspect, this application provides a communication apparatus including a processor, configured to execute a computer program or executable instructions stored in a memory. When the computer program or the executable instructions are executed, the apparatus is enabled to perform the method according to any one of the possible implementations of the first aspect and the second aspect.

In a possible implementation, the processor and the memory are integrated together.

In another possible implementation, the memory is located outside the communication apparatus.

For beneficial effects of the third aspect to the ninth aspect, refer to the beneficial effects of the first aspect or the second aspect. Details are not described herein again.

## BRIEF DESCRIPTION OF DRAWINGS

FIG. 1 is a diagram of a structure of a communication system according to an embodiment of this application;
FIG. 2 is a diagram of a signal transmission method according to an embodiment of this application;
FIG. 3 is a diagram of interaction of a signal transmission method according to an embodiment of this application;
FIG. 4(a) is a diagram of one type of first indication information according to an embodiment of this application;
FIG. 4(b) is a diagram of another type of first indication information according to an embodiment of this application;
FIG. 5 is a diagram of interaction of another signal transmission method according to an embodiment of this application;
FIG. 6 is a diagram of another signal transmission method according to an embodiment of this application;
FIG. 7 is a diagram of interaction of still another signal transmission method according to an embodiment of this application;
FIG. 8 is a diagram of still another signal transmission method according to an embodiment of this application;
FIG. 9 is a diagram of interaction of still another signal transmission method according to an embodiment of this application;
FIG. 10 is a diagram of still another signal transmission method according to an embodiment of this application;
FIG. 11 is a diagram of a structure of a communication apparatus according to an embodiment of this application;
FIG. 12 is a diagram of a structure of another communication apparatus according to an embodiment of this application; and
FIG. 13 is a diagram of a structure of a chip according to an embodiment of this application.

## DESCRIPTION OF EMBODIMENTS

The following clearly and completely describes the technical solutions in embodiments of this application with reference to the accompanying drawings in embodiments of this application.

I. Communication System

To better understand a signal transmission method disclosed in embodiments of this application, a communication system to which embodiments of this application are applicable is described.

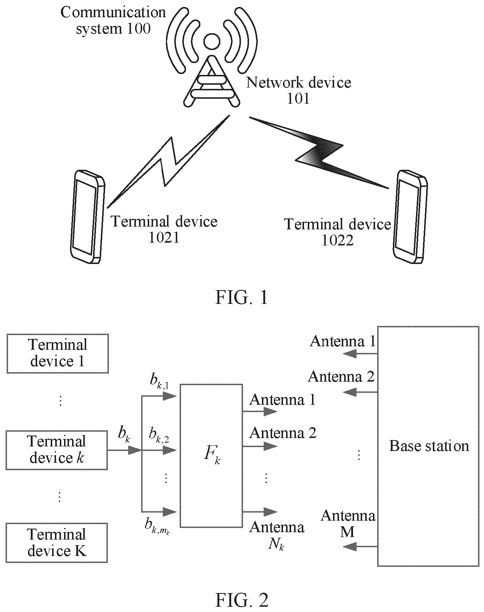

Refer to FIG. 1. FIG. 1 is a diagram of a structure of a communication system 100 according to an embodiment of this application. The communication system 100 may include but is not limited to one network device 101 and two terminal devices (a terminal device 1021 and a terminal device 1022). Quantities and forms of devices shown in FIG. 1 are used as examples and do not constitute a limitation on embodiments of this application. In actual application, two or more network devices and three or more terminal devices may be included. The communication system shown in FIG. 1 is described by using an example in which there is one network device and two terminal devices and the network device 101 can provide a service for the terminal device 1021 and the terminal device 1022.

The technical solutions in embodiments of this application may be applied to wireless communication systems such as 5th-generation mobile communication (5th-generation, 5G), satellite communication, and short-distance communication. The wireless communication system mentioned in embodiments of this application includes but is not limited to a narrowband internet of things (Narrow Band-Internet of Things, NB-IoT) system, a long term evolution (Long Term Evolution, LTE) system, and enhanced mobile broadband (enhanced mobile broadband, eMBB), ultra-reliable low-latency communication (ultra reliable low latency communication, URLLC), and massive machine type of communication (massive machine type of communication, mMTC) in three application scenarios of a 5G communication system, and further includes a subsequent evolved communication system such as 6th-generation mobile communication (6th-generation, 6G) with continuous development of communication technologies.

In embodiments of this application, the network device is an apparatus deployed in a radio access network to provide a wireless communication function for the terminal device. The network device may include various forms of macro base stations, micro base stations (also referred to as small stations), relay stations, access points, and the like. In systems using different radio access technologies, names of the network device may be different, for example, a base transceiver station (base transceiver station, BTS) in a global system for mobile communications (global system for mobile communications, GSM) or code division multiple access (code division multiple access, CDMA) network, a NodeB (NodeB, NB) in wideband code division multiple access (wideband code division multiple access, WCDMA), and an evolved NodeB (evolved NodeB, eNB or eNodeB) in a long term evolution (long term evolution, LTE) system. The network device may alternatively be a radio controller in a cloud radio access network (cloud radio access network, CRAN) scenario. Alternatively, the network device may be a base station device in a 5G network or a network device in a future-evolved communication network. Alternatively, the network device may be a wearable device or a vehicle-mounted device. Alternatively, the network device may be a transmission and reception point (transmission and reception point, TRP) or the like. This is not specifically limited in embodiments of this application.

The terminal device in embodiments of this application may include various handheld devices, vehicle-mounted devices, wearable devices, or computing devices that have a wireless communication function, or other processing devices connected to a wireless modem. The terminal may be a mobile station (mobile station, MS), a subscriber unit (subscriber unit), a cellular phone (cellular phone), a smartphone (smartphone), a wireless data card, a personal digital assistant (personal digital assistant, PDA) computer, a tablet computer, a wireless modem (modem), a handset (handset) device, a laptop computer (laptop computer), a machine-type communication (machine-type communication, MTC) terminal, or the like.

Embodiments of this application may be applied to a communication scenario in which a plurality of terminal devices communicate with a network device at the same time and both the network device and the terminal devices each are equipped with one or more antennas.

For ease of understanding of embodiments disclosed in this application, the following two points are described.

(1) In embodiments disclosed in this application, a scenario of a 5G new radio (new radio, NR) network in a wireless communication network is used as an example for description. It should be noted that solutions in embodiments disclosed in this application may be further applied to another wireless communication network, and a corresponding name may be replaced with a name of a corresponding function in the another wireless communication network.

(2) Aspects, embodiments, or features of this application are presented in embodiments disclosed in this application by describing a system that includes a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

Currently, in multi-user multiple input multiple output (multi-user multiple input multiple output, MU-MIMO), a base station and each terminal device may be equipped with a plurality of antennas to improve spectral efficiency.

FIG. 2 shows a signal transmission method. As shown in FIG. 2, a total of K terminal devices participate in uplink MU-MIMO communication, where K is an integer greater than or equal to 2. For a terminal device $k$, the terminal device $k$ sends $m_k$ data streams in total, and each data stream is a complex modulation signal. $k$ is an integer greater than or equal to 1 and less than or equal to $K$. The terminal device $k$ precodes the $m_k$ complex modulation data streams by using a precoding matrix $F_k$ indicated by a base station, maps the complex modulation data streams to $N_k$ antennas, and sends the complex modulation data streams through the $N_k$ antennas. The base station receives, from the $K$ terminal devices through $M$ antennas of the base station, data $y$ that passes through a channel, and restores a channel $H$ from the $K$ terminal devices to the base station by using a plurality of pilots. $M$ is an integer greater than or equal to 1. For the terminal device $k$, the base station uses a low-complexity detection algorithm to obtain an estimation of a data stream sent by the terminal device $k$. For example, the base station uses a minimum mean squared error (minimum mean squared error, MMSE) detection algorithm to obtain an estimation of a data stream sent by the terminal device $k$. Therefore, the base station restores a data stream sent by each of the $K$ terminal devices.

In this manner, a diversity degree obtained when the base station performs detection by using the low-complexity detection algorithm is lower than a diversity degree obtained when the base station uses a maximum likelihood detection algorithm. For example, if $K$ single-antenna terminal devices in uplink MU-MIMO simultaneously send uplink data to the base station, each terminal device sends a single-stream complex modulation signal. When the base station is configured with $M$ antennas and uses a low-complexity detection algorithm, such as a zero forcing (zero forcing, ZF) algorithm or an MMSE algorithm, a diversity degree of the base station is $M - K + 1$. A diversity degree obtained when the base station uses a high-complexity detection algorithm (for example, a maximum likelihood receiving algorithm) is $M$.

A lower diversity degree indicates less inter-terminal device interference received by the base station, and a higher diversity degree indicates greater inter-terminal device interference received by the base station. It can be learned that when the $K$ terminal devices communicate with the base station in the manner in FIG. 1, a capability of the base station to resist multi-user interference is low.

In another implementation, the $K$ terminal devices no longer simultaneously send complex modulation signals, but send hybrid modulation signals including real modulation and complex modulation. For example, a single terminal device sends one data stream. Each data stream is a hybrid modulation signal, that is, a complex modulation signal and a real modulation signal. Different terminal devices send complex modulation signals and real modulation signals in equal proportion. Signals sent by the $K$ terminal devices include both real modulation signals and complex modulation signals. The base station receives, on $M$ antennas, signals that are sent by the K terminal devices and that pass through a channel. After restoring the channel by using a pilot, the base station detects a received signal by using a low-complexity detection algorithm, for example, by using a widely linear zero forcing (widely Linear ZF) or an MMSE algorithm, to restore a data stream sent by each terminal device.

Compared with the implementation in FIG. 2, this implementation may improve a capability of the base station to resist multi-user interference. For example, in uplink MU-MIMO, a total of $K$ single-antenna terminal devices simultaneously send uplink signals, and each terminal device sends a single-stream hybrid modulation signal according to a specific format. An effect is as follows: At each time point, $K_c$ terminal devices in the $K$ terminal devices send complex signals, and the other terminal devices send real signals. For a base station configured with $M$ antennas, if a low-complexity widely linear algorithm is for detection, a diversity degree of the base station is $M - (K + K_C - 1) / 2$. The diversity degree is higher than the diversity degree obtained when communication is performed in the manner shown in FIG. 2. Therefore, a capability of the base station to resist multi-user interference is improved. However, when the terminal device sends a real modulation signal, a rate of the real modulation signal is reduced to 1/2 of a complex modulation signal. Therefore, in this manner, a transmission rate of the terminal device is reduced.

II. Signal Transmission Method

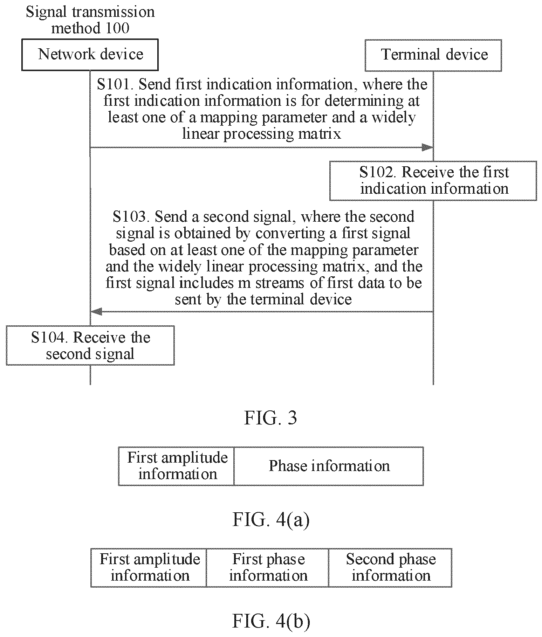

An embodiment of this application provides a signal transmission method 100. FIG. 3 is a diagram of interaction of the signal transmission method 100. The signal transmission method 100 is described from a perspective of interaction between a terminal device and a network device. The signal transmission method 100 includes but is not limited to the following steps.

S101. A network device sends first indication information, where the first indication information is for determining at least one of a mapping parameter and a widely linear processing matrix.

In a communication scenario in which $K$ terminal devices communicate with the network device, the network device separately sends the first indication information to the $K$ terminal devices, where the first indication information sent to a terminal device $k$ is for determining at least one of a mapping parameter and a widely linear processing matrix of the terminal device $k$. $K$ is an integer greater than or equal to 2. $k$ is an integer greater than or equal to 1 and less than or equal to $K$.

Optionally, the network device separately sends the first indication information to the K terminal devices via a transit device. To be specific, one or more transit devices separately forward the first indication information received from the network device to different terminal devices. The transit device may be a network device other than the network device, or may be a terminal device other than the $K$ terminal devices. For example, the network device sends first indication information #$a$ of a terminal device $a$ to a first device, and the first device receives the first indication information #$a$, and sends the first indication information #$a$ to the terminal device $a$. For another example, the network device sends first indication information #$b$ of a terminal device $b$ to a second device, and the second device receives the first indication information #$a$, and sends the first indication information #$b$ to the terminal device $b$.

The mapping parameter includes a first mapping parameter of $m$ streams of first data and a second mapping parameter of conjugates of the $m$ streams of first data. The widely linear processing matrix includes a first widely linear processing matrix of $m$ streams of second data and a second widely linear processing matrix of conjugates of the $m$ streams of second data. The $m$ streams of first data are data streams in a first signal to be sent by the terminal device, and each stream of first data is a complex modulation signal. $m$ is an integer greater than or equal to 1.

The first signal includes the $m$ streams of first data. Therefore, there are $m$ first mapping parameters and $m$ second mapping parameters, and one first mapping parameter and one second mapping parameter correspond to one stream of first data. If the terminal device $k$ is equipped with $N$ antennas, both the first widely linear processing matrix and the second widely linear processing matrix are an $N \cdot m$ matrix.

In an optional implementation, when the first indication information is for determining the widely linear processing matrix, the widely linear processing matrix is for performing widely linear processing on the $m$ streams of first data in the first signal and the conjugates of the $m$ streams of first data. In this case, the $m$ streams of second data are the $m$ streams of first data.

In another optional implementation, when the first indication information is for determining the mapping parameter and the widely linear processing matrix, the mapping parameter is for mapping the $m$ streams of first data and the conjugates of the $m$ streams of first data, and the widely linear processing matrix is for performing widely linear processing on mapped data and a conjugate of the mapped data. In this case, the $m$ streams of second data are $m$ streams of data obtained by mapping the $m$ streams of first data and the conjugates of the $m$ streams of first data based on the first mapping parameter and the second mapping parameter.

The following describes an implementation of the first indication information with reference to a function of the first indication information.

Implementation 1: When the first indication information is for determining the mapping parameter, the first indication information includes first amplitude information and phase information.

In an optional implementation, as shown in FIG. 4(a), when the first indication information is for determining the mapping parameter, the first indication information includes first amplitude information and phase information. The first amplitude information indicates amplitude information of the first mapping parameter, indicates amplitude information of the second mapping parameter, or indicates a relative relationship between amplitude information of the first mapping parameter and amplitude information of the second mapping parameter. The relative relationship between the amplitude information of the first mapping parameter and the amplitude information of the second mapping parameter may be a ratio of the amplitude information of the first mapping parameter to the amplitude information of the second mapping parameter. The phase information indicates phase information of the first mapping parameter and phase information of the second mapping parameter.

It can be learned that the network device indicates, to the terminal device based on the first indication information, the amplitude information of the first mapping parameter, the amplitude information of the second mapping parameter, or the relative relationship between the amplitude information of the first mapping parameter and the amplitude information of the second mapping parameter, and the phase information of the first mapping parameter and the phase information of the second mapping parameter. This manner helps the terminal device determine the first mapping parameter and the second mapping parameter based on the first indication information.

In another optional implementation, as shown in FIG. 4(b), when the first indication information is for determining the mapping parameter, the first indication information includes first amplitude information, first phase information, and second phase information. That is, the phase information in FIG. 4(a) includes the first phase information and the second phase information. The first phase information indicates the phase information of the first mapping parameter, and the second phase information indicates the phase information of the second mapping parameter.

It can be learned that when the network device indicates the phase information by using the first indication information, the network device may further indicate the phase information of the first mapping parameter and the phase information of the second mapping parameter to the terminal device by using the first phase information and the second phase information, respectively.

Optionally, the first phase information indicates reference phase information, and the second phase information indicates differential phase information. The reference phase information may be determined by the network device based on the amplitude information of the first mapping parameter and the amplitude information of the second mapping parameter of the terminal device. The reference phase information may be the phase information of the first mapping parameter, or may be the phase information of the second mapping parameter.

For example, for the terminal device $k$, when amplitude information of a first mapping parameter $\alpha_k$ is $A_k \geq \dfrac{1}{\sqrt{2}}$, the network device determines that the reference phase information is phase information of the first mapping parameter $a_k$;

or when the amplitude information of the first mapping parameter $\alpha_k$ is $A_k < \dfrac{1}{\sqrt{2}}$, the network device determines that the reference phase information is phase information of a second mapping parameter $\beta_k$.

The differential phase information may be determined by the network device based on the reference phase information, the phase information of the first mapping parameter, or the phase information of the second mapping parameter. For example, if the network device determines that the reference phase information is the phase information of the first mapping parameter $a_k$, the network device determines the differential phase information based on the phase information of the second mapping parameter and the reference phase information, where the differential phase information is a difference between the phase information of the second mapping parameter and the reference phase information.

It can be learned that in the first indication information in this manner, the first amplitude information does not need to separately indicate the amplitude information of the first mapping parameter and the amplitude information of the second mapping parameter, thereby reducing signaling overheads. Optionally, the first amplitude information may alternatively indicate the amplitude information of the first mapping parameter and the amplitude information of the second mapping parameter, so that the terminal device directly determines the amplitude information of the first mapping parameter and the amplitude information of the second mapping parameter from the first amplitude information, thereby reducing processing complexity of the terminal device.

In still another optional implementation, at least two of phase information of the first mapping parameter, phase information of the second mapping parameter, amplitude information of the first mapping parameter, and amplitude information of the second mapping parameter are jointly encoded in the first indication information. In other words, the network device jointly encodes, in the first indication information, at least two of the phase information of the first mapping parameter, the phase information of the second mapping parameter, the amplitude information of the first mapping parameter, and the amplitude information of the second mapping parameter, and may indicate, by using other information in the first indication information, information that is in the phase information of the first mapping parameter, the phase information of the second mapping parameter, the amplitude information of the first mapping parameter, and the amplitude information of the second mapping parameter and that is not jointly encoded.

The network device performs joint encoding on at least two of the phase information of the first mapping parameter, the phase information of the second mapping parameter, the amplitude information of the first mapping parameter, and the amplitude information of the second mapping parameter, so that different status combinations of amplitude information and phase information can be flexibly configured when a quantity of bits is given, thereby improving quantization precision and a system capacity, or reducing signaling overheads.

For example, the phase information of the first mapping parameter and the phase information of the second mapping parameter are jointly encoded by the network device in the first indication information, and the amplitude information of the first mapping parameter or the amplitude information of the second mapping parameter is indicated by using the first amplitude information in the first indication information.

For example, the phase information of the first mapping parameter and the amplitude information of the first mapping parameter are jointly encoded by the network device in the first indication information, and the phase information of the second mapping parameter and the amplitude information of the second mapping parameter may be respectively indicated by the network device by using the first information and the second information in the first indication information.

It may be understood that the first amplitude information indicates amplitude information of $m$ mapping parameters, and the phase information also indicates phase information of the $m$ mapping parameters. For example, when the first amplitude information indicates the amplitude information of the first mapping parameter, the first amplitude information indicates amplitude information of $m$ first mapping parameters. For another example, the first phase information indicates phase information of $m$ first mapping parameters, and the second phase information indicates phase information of $m$ second mapping parameters. This helps the terminal device obtain the $m$ first mapping parameters and the $m$ second mapping parameters, and each first mapping parameter and each second mapping parameter correspond to one stream of first data of the terminal device. In this manner, the network device does not need to separately indicate amplitude information and phase information of each first mapping parameter and amplitude information and phase information of each second mapping parameter, so that signaling overheads can be reduced.

Similarly, when the network device jointly encodes at least two of the phase information of the first mapping parameter, the phase information of the second mapping parameter, the amplitude information of the first mapping parameter, and the amplitude information of the second mapping parameter, each piece of encoded information includes $m$ pieces of related information. For example, when jointly encoding the phase information of the first mapping parameter and the phase information of the second mapping parameter, the network device jointly encodes phase information of $m$ first mapping parameters and phase information of $m$ second mapping parameters, so that signaling overheads can be reduced.

Implementation 2: When the first indication information is for determining the widely linear processing matrix, the first indication information includes codebook index information and second amplitude information.

The codebook index information indicates a codebook index, and the codebook index indicates the first widely linear processing matrix and the second widely linear processing matrix. The second amplitude information indicates at least one of an amplitude of the first widely linear processing matrix and an amplitude of the second widely linear processing matrix.

For example, for the terminal device $k$, the first widely linear processing matrix and the second widely linear processing matrix are respectively $T_{1,k}$ and $T_{2,k}$. $T_{1,k}$ and $T_{2,k}$ may be respectively represented as:

$$T_{1,k} = [w_{1,k} \, w_{2,k} \ldots w_{m,k}] * diag(a_{1,k}, a_{2,k}, \ldots, a_{m,k}) \qquad (1)$$

$$T_{2,k} = [v_{1,k} \, v_{2,k} \dots v_{m,k}] * diag(b_{1,k}, b_{2,k}, \dots, b_{m,k}) \qquad (2)$$

Both $w_{i,k}$ and $v_{i,k}$ are vectors of $N_k * 1$, and represent phase information. $N_k$ is a quantity of antennas of the terminal device $k$. $a_{i,k}$ and $b_{i,k}$ are nonnegative integers, and respectively represent amplitude information of $T_{1,k}$ for $w_{i,k}$ and amplitude information of $T_{1,k}$ for $v_{i,k}$. The codebook index included in the first indication information is for determining $w_{i,k}$ and $v_{i,k}$, that is, for determining phase information of each element in the first widely linear processing matrix and the second widely linear processing matrix.

A codebook is predefined in the network device and the terminal device. The codebook in embodiments of this application may be a discrete Fourier transform (discrete fourier transform, DFT) codebook. The network device determines a codebook for determining $w_{i,k}$ and $v_{i,k}$, and then indicates a codebook index (index) of the codebook to the terminal device by using the codebook index information, so that the terminal device determines the codebook index based on the codebook index information, determines the codebook corresponding to the codebook index, and then determines $w_{i,k}$ and $v_{i,k}$ based on the codebook.

In addition, the network device may indicate at least one of $a_{i,k}$ and $b_{i,k}$ to the terminal device by using the second amplitude information in the first indication information. For example, the second amplitude information indicates $a_{i,k}$ and $b_{i,k}$. For another example, the second amplitude information indicates $a_{i,k}$. For another example, the second amplitude information indicates $b_{i,k}$. When the second amplitude information indicates one of $a_{i,k}$ and $b_{i,k}$, signaling overheads can be reduced.

It may be understood that, when indicating the codebook index by using the codebook index information, the network device indicates $m$ codebook indexes. Similarly, when the network device indicates at least one of $a_{i,k}$ and $b_{i,k}$ by using the second amplitude information, the network device indicates $m$ pieces of amplitude information. For example, when the network device indicates $a_{i,k}$ by using the second amplitude information, the network device indicates $m$ $a_{i,k}$.

Implementation 3: When the first indication information is for determining the mapping parameter and the widely linear processing matrix, the first indication information includes first amplitude information, phase information, codebook index information, and second amplitude information.

For implementations of the first amplitude information, the phase information, the codebook index information, and the second amplitude information, refer to the foregoing implementation 1 and implementation 2. Details are not described again.

In conclusion, the network device may perform flexible indication by using information in the first indication information, so that the terminal device can determine at least one of the mapping parameter and the widely linear processing matrix based on the first indication information.

Optionally, the network device may further explicitly indicate at least one of the mapping parameter and the widely linear processing matrix to the terminal device based on the first indication information, so that the terminal device can directly obtain at least one of the mapping parameter and the widely linear processing matrix from the first indication information. In this manner, processing complexity of the terminal device can be reduced. For example, the first indication information indicates the first mapping parameter and the second mapping parameter. For another example, the first indication information indicates the first mapping parameter, the second mapping parameter, the first widely linear processing matrix, and the second widely linear processing matrix.

S102. The terminal device receives the first indication information.

The terminal device receives the first indication information from the network device, or receives the first indication information from the transit device, where the first indication information of the transit device is from the network device.

S103. The terminal device sends a second signal, where the second signal is obtained by converting a first signal based on at least one of the mapping parameter and the widely linear processing matrix, and the first signal includes $m$ streams of first data to be sent by the terminal device.

The terminal device may determine at least one of the mapping parameter and the widely linear processing matrix based on the first indication information. Therefore, the terminal device converts the to-be-sent first signal and a conjugate of the first signal based on at least one of the mapping parameter and the widely linear processing matrix, that is, converts the $m$ streams of first data and the conjugates of the $m$ streams of first data, to obtain the second signal.

With reference to the implementation of the first indication information in S101, the following separately describes determining manners in which the terminal device determines the mapping parameter and the widely linear processing matrix.

1. Manner of determining the mapping parameter

In an optional implementation, when the first amplitude information in S101 indicates the amplitude information of the first mapping parameter, the terminal device may determine the amplitude information of the second mapping parameter based on the amplitude information of the first mapping parameter. For example, if the amplitude information that is of the first mapping parameter and that is indicated by the first amplitude information is $A$, the terminal device determines that the amplitude information $B$ that is of the second mapping parameter and that corresponds to the amplitude information of the first mapping parameter is $\sqrt{1-A^2}$.

In another optional implementation, when the first amplitude information in S101 indicates the amplitude information of the second mapping parameter, the terminal device may determine the amplitude information of the first mapping parameter based on the amplitude information of the second mapping. For example, if the amplitude information that is of the second mapping parameter and that is indicated by the first amplitude information is $B$, the terminal device determines that the amplitude information $A$ that is of the first mapping parameter and that corresponds to the amplitude information of the second mapping parameter is $\sqrt{1-B^2}$.

In still another optional implementation, when the first amplitude information in S101 indicates the relative relationship between the amplitude information of the first mapping parameter and the amplitude information of the second mapping parameter, the terminal device may determine the amplitude information of the first mapping parameter and the amplitude information of the second mapping parameter based on transmit power and the relative relationship.

For example, the relative relationship indicated by the first amplitude information to the terminal device $k$ is a ratio of the amplitude information of the first mapping parameter to the amplitude information of the second mapping parameter. For example, if the ratio is $\dfrac{a}{b}$, and the transmit power of the terminal device $k$ is $P$, the terminal device $k$ determines that the amplitude information of the first mapping parameter corresponding to the ratio is $P*\dfrac{a}{b}$ and that the amplitude information of the second mapping parameter corresponding to the ratio is $P*(1-\dfrac{a}{b})$.

It can be learned that the terminal device may determine the amplitude information of the first mapping parameter and the amplitude information of the second mapping parameter based on the first amplitude information in the first indication information.

In an optional implementation, if the phase information in S101 indicates the phase information of the first mapping parameter and the phase information of the second mapping parameter, the terminal device determines the phase information of the first mapping parameter and the phase information of the second mapping parameter from the phase information. For example, if the phase information of the first mapping parameter and the phase information of the second mapping parameter are jointly encoded in the phase information, the terminal device may obtain the phase information of the first mapping parameter and the phase information of the second mapping parameter by decoding the phase information.

In another optional implementation, the phase information in S101 includes the first phase information and the second phase information. The first phase information indicates the phase information of the first mapping parameter, and the second phase information indicates the phase information of the second mapping parameter. In this case, the terminal device may obtain the phase information of the first mapping parameter and the phase information of the second mapping parameter from the first phase information and the second phase information, respectively.

In still another optional implementation, the first phase information indicates the reference phase information, and the second phase information indicates the differential phase information. In this manner, the terminal device may determine, based on the amplitude information of the first mapping parameter and the amplitude information of the second mapping parameter, whether the reference phase information is the phase information of the first mapping parameter or the phase information of the second mapping parameter. For example, when the amplitude information of the first mapping parameter $\alpha_k$ is $A_k \geq \dfrac{1}{\sqrt{2}}$, the terminal device determines that the reference phase information is the phase information of the first mapping parameter $a_k$; or when the amplitude information of the first mapping parameter $\alpha_k$ is $A_k < \dfrac{1}{\sqrt{2}}$, the terminal device determines that the reference phase information is the phase information of the second mapping parameter $\beta_k$.

If the terminal device determines that the reference phase information is the phase information of the first mapping parameter, the terminal device may determine the phase information of the second mapping parameter based on the reference phase information and the differential phase information. Similarly, if the terminal device determines that the reference phase information is the phase information of the second mapping parameter, the terminal device may determine the phase information of the first mapping parameter based on the reference phase information and the differential phase information. For example, if the terminal device determines that the reference phase information indicated by the first phase information is the phase information of the first mapping parameter, the terminal device determines that the phase information of the second mapping parameter is a difference between the reference phase information and the differential phase information.

In still another optional implementation, when at least two of the phase information of the first mapping parameter, the phase information of the second mapping parameter, the amplitude information of the first mapping parameter, and the amplitude information of the second mapping parameter are jointly encoded in the first indication information, the terminal device decodes the first indication information, to obtain at least two of the phase information of the first mapping parameter, the phase information of the second mapping parameter, the amplitude information of the first mapping parameter, and the amplitude information of the second mapping parameter.

For example, if the phase information of the first mapping parameter and the phase information of the second mapping parameter are jointly encoded in the first indication information, the terminal device may obtain the phase information of the first mapping parameter and the phase information of the second mapping parameter by decoding the first indication information. In addition, the terminal device obtains the amplitude information of the first mapping parameter, the amplitude information of the second mapping parameter, or the relative relationship between the amplitude information of the first mapping parameter and the amplitude information of the second mapping parameter by decoding other information in the first indication information, so that the terminal device can obtain the amplitude information of the first mapping parameter and the amplitude information of the second mapping parameter.

It can be learned that the terminal device may flexibly determine the amplitude information and the phase information of the first mapping parameter and the amplitude information and the phase information of the second mapping parameter based on the information in the first indication information, to determine the first mapping parameter and the second mapping parameter.

2. Manner of determining the widely linear processing matrix

It can be learned from S101 that the first indication information includes the codebook index information and the second amplitude information. The codebook index information indicates the codebook index.

A plurality of codebooks are predefined in the terminal device. The terminal device may determine, from the plurality of codebooks based on the codebook index indicated by the codebook index information, the codebook corresponding to the codebook index, and then determine the first widely linear processing matrix and the second widely linear processing matrix based on the determined codebook. The terminal device may determine phase information of the first widely linear processing matrix and phase information of the second widely linear processing matrix.

The second amplitude information indicates one of amplitude information of the first widely linear processing matrix and amplitude information of the second widely linear processing matrix. The terminal device may determine the amplitude information of the first widely linear processing matrix and the amplitude information of the second widely linear processing matrix based on the second amplitude information.

For example, if the second amplitude information indicates the amplitude information $X$ of the first widely linear processing matrix, the terminal device may determine that the amplitude information Y of the second widely linear processing matrix is $\sqrt{1-X^2}$ .

It can be learned that the terminal device may determine the amplitude information and the phase information of the first widely linear processing matrix and the amplitude information and the phase information of the second widely linear processing matrix based on the codebook index information and the second amplitude information in the first indication information, to determine the first widely linear processing matrix and the second widely linear processing matrix.

The terminal device may directly send the second signal to the network device, or may send the second signal to the network device via the transit device. In the MU-MIMO scenario in embodiments of this application, each of a plurality of terminal devices separately sends a second signal, and the second signal sent by each terminal device is obtained by converting, based on at least one of the mapping parameter and the widely linear processing matrix of the terminal device, a first signal to be sent by the terminal device and a conjugate of the first signal.

S104. The network device receives the second signal.

The network device receives a plurality of second signals, where each of the plurality of second signals is obtained by a corresponding terminal device by converting a to-be-sent first signal and a conjugate of the first signal based on at least one of a mapping parameter and a widely linear processing matrix of the terminal device. In this way, a degree of freedom of each second signal can be improved, so that a capability of the network device to resist multi-user interference can be improved.

In an optional implementation, the first signal is a proper Gaussian signal, and the second signal is an improper Gaussian signal. The proper Gaussian signal is a signal that meets independent co-distribution of an I channel and a Q channel, or a signal whose pseudo covariance is zero. In this case, the improper Gaussian signal is a signal that meets non-independent co-distribution of an I channel and a Q channel, or a signal whose pseudo covariance is not zero.

When the first signal is a proper Gaussian signal, and the second signal is an improper Gaussian signal, the terminal device converts the first signal having a proper Gaussian feature into the second signal having no proper Gaussian feature. In this way, the sent second signal has a feature that the I channel and the Q channel are not independently co-distributed, or a pseudo covariance of the second signal is not zero, so that the degree of freedom of the second signal is improved, thereby improving the capability of the network device to resist the multi-user interference.

Optionally, both the first signal and the second signal are improper Gaussian signals. When the first signal is an improper Gaussian signal, the terminal device processes the first signal and a conjugate of the first signal by using at least one of the mapping parameter and the widely linear processing matrix, to obtain the second signal that still has an improper Gaussian feature. The terminal device may enhance the improper Gaussian feature of the second signal by converting the first signal, so that the degree of freedom of the second signal can be improved, thereby improving the capability of the network device to resist the multi-user interference.

It can be learned that in this embodiment of this application, the network device indicates at least one of the mapping parameter and the widely linear processing matrix to the terminal device based on the first indication information, so that the second signal received by the network device is obtained by the terminal device by processing the $m$ streams of first data in the to-be-sent first signal and the conjugates of the $m$ streams of first data based on at least one of the mapping parameter and the widely linear processing matrix. In this manner, a degree of freedom of the second signal can be improved, so that a capability of the network device to resist multi-user interference can be improved.

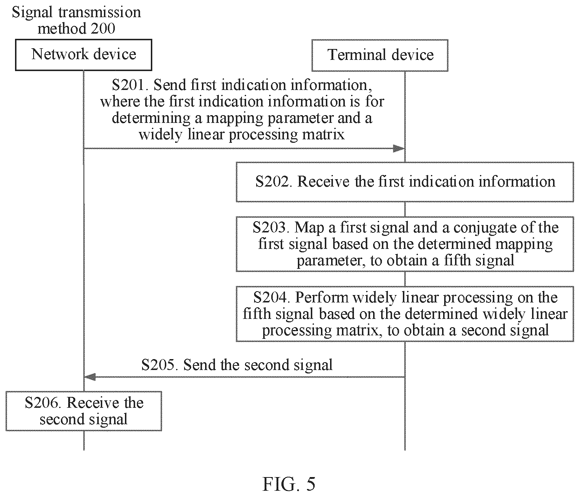

In an embodiment of this application, an example in which first indication information sent by a network device is for determining a mapping parameter and a widely linear processing matrix is used to provide a signal transmission method 200. FIG. 5 is a diagram of interaction of the signal transmission method 200. The signal transmission method 200 includes but is not limited to the following steps.

S201. A network device sends first indication information, where the first indication information is for determining a mapping parameter and a widely linear processing matrix.

The mapping parameter includes a first mapping parameter of $m$ streams of first data and a second mapping parameter of conjugates of the $m$ streams of first data. The widely linear processing matrix includes a first widely linear processing matrix of $m$ streams of second data and a second widely linear processing matrix of conjugates of the $m$ streams of second data. The $m$ streams of first data are data streams in a first signal to be sent by a terminal device, and the first data is a complex modulation signal. The $m$ streams of second data are $m$ streams of data obtained by the terminal device by mapping the $m$ streams of first data and the conjugates of the $m$ streams of first data based on the first mapping parameter and the second mapping parameter. $m$ is an integer greater than or equal to 1.

When the first indication information is for determining the mapping parameter and the widely linear processing matrix, for an implementation of the first indication information, refer to S101. Details are not described again.

S202. The terminal device receives the first indication information.

S203. The terminal device maps the first signal and a conjugate of the first signal based on the determined mapping parameter, to obtain a fifth signal.

For an implementation in which the terminal device determines the first mapping parameter and the second mapping parameter based on the first indication information, refer to the descriptions in S103. Details are not described again.

That the terminal device maps the first signal and a conjugate of the first signal based on the determined mapping parameter, to obtain a fifth signal includes: The terminal device maps the $m$ streams of first data in the first signal and the conjugates of the $m$ streams of first data based on the first mapping parameter and the second mapping parameter, to obtain the fifth signal, where the fifth signal includes $m$ streams of third data. Therefore, the terminal device performs one-to-one mapping on the $m$ streams of first data and the conjugates of the $m$ streams of first data based on the first mapping parameter and the second mapping parameter.

S204. The terminal device performs widely linear processing on the fifth signal based on the determined widely linear processing matrix, to obtain a second signal.

For an implementation in which the terminal device determines the first widely linear processing matrix and the second widely linear processing matrix based on the first indication information, refer to the descriptions in S103. Details are not described again.

That the terminal device performs widely linear processing on the fifth signal based on the determined widely linear processing matrix, to obtain a second signal includes: The terminal device performs widely linear processing on the $m$ streams of third data in the fifth signal and conjugates of the $m$ streams of third data based on the first widely linear processing matrix and the second widely linear processing matrix, to obtain the second signal. The second signal includes *N* streams of data, where *N* is a quantity of antennas of the terminal device, and *N* is an integer greater than or equal to 1. In other words, the terminal device performs widely linear processing on the *m* streams of third data and the conjugates of the *m* streams of third data, to map the *m* streams of third data to the *N* antennas of the terminal device, so that the terminal device sends *N* streams of data in the second signal on the *N* antennas.

S205. The terminal device sends the second signal.

It may be understood that the terminal device sends the *N* streams of data in the second signal on the *N* antennas.

S206. The network device receives the second signal.

The network device receives the second signal on *M* antennas. *M* is an integer greater than or equal to 1.

In an optional implementation, that the network device receives the second signal includes: The network device performs widely linear processing on a received third signal and a conjugate of the third signal, to obtain a fourth signal. The network device performs demapping processing on the fourth signal to obtain the second signal. The third signal is a signal obtained based on the second signal passing through a channel.

The second signal sent by the terminal device is obtained by performing widely linear processing on the fifth signal and a conjugate of the fifth signal, and the fifth signal is obtained by mapping the to-be-sent first signal and the conjugate of the first signal. Correspondingly, when receiving the second signal, the network device needs to perform widely linear processing on the received third signal and the conjugate of the third signal, and then perform demapping processing on the fourth signal obtained through the widely linear processing, to obtain the second signal sent by the terminal device. The network device receives a second signal of each terminal device in this manner, to obtain the second signal sent by each terminal device.

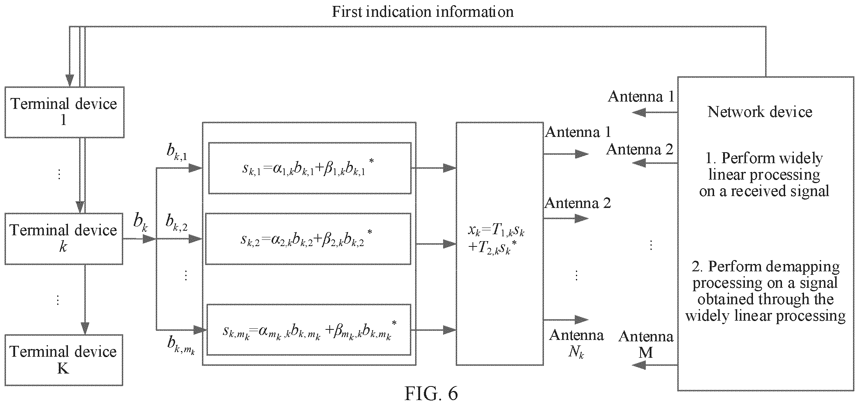

In this embodiment of this application, for a diagram of the signal transmission method 200, refer to FIG. 6. As shown in FIG. 6, the network device separately sends the first indication information to *K* terminal devices. The first indication information of each terminal device is for determining a mapping parameter and a widely linear processing matrix of the terminal device. For any terminal device *k*, the mapping parameter of the terminal device *k* includes *m* first mapping parameters $\alpha$ for mapping $m_k$ pieces of first stream data $b_k$ in the to-be-sent first signal, and $m_k$ second mapping parameters $\beta$ for mapping conjugates $b_k^*$ of the *m* pieces of first stream data. The widely linear processing matrix of the terminal device *k* includes a first widely linear processing matrix $T_{1,k}$ for performing widely linear processing on $m_k$ pieces of second data $s_k$ and a second widely linear processing matrix $T_{2,k}$ for performing widely linear processing on conjugates $s_k^*$ of the $m_k$ pieces of second data. The following is a processing procedure of the terminal device *k* and the network device.

S11. The terminal device *k* maps $m_k$ pieces of first data $b_k$ and conjugates $b_k^*$ of the $m_k$ pieces of first data based on the first mapping parameter $\alpha$ and the second mapping parameter $\beta$, to obtain $m_k$ pieces of third data $s_k$.

The third data $s_k$ may be obtained by using the following formula (3):

$$s_k = P(\alpha_k, \beta_k) * q(b_k) \tag{3}$$

In this formula:

$$P(\alpha_k, \beta_k) = diag([\alpha_{1,k}, \beta_{1,k}], [\alpha_{2,k}, \beta_{2,k}], ..., [\alpha_{m_k,k}, \beta_{m_k,k}]) \tag{4}$$

$$q(b_k) = [b_{k,1}; b_{k,1}^*; b_{k,2}; b_{k,2}^*; ...; b_{k,m_k}; b_{k,m_k}^*] \tag{5}$$

$b_{k,m_k}$ is an $m_k^{th}$ stream of first data, and $b_{k,m_k}^*$ represents a conjugate of $b_{k,m_k}$. diag() represents a diagonal matrix or a block diagonal matrix, $P(\alpha_k, \beta_k)$ is a block diagonal matrix of $m_k * 2m_k$, and $q(b_k)$ is a vector of $2m_k * 1$.

The following may be obtained by extending the foregoing formula (3):

$$s_{k,i} = \alpha_{i,k} b_{k,i} + \beta_{i,k} b_{k,i}^* \tag{6}$$

*i* is greater than or equal to 0, and is less than or equal to $m_k$. It can be learned from the formula (6) that $s_{k,i}$ and $b_{k,i}$ form a one-to-one mapping relationship, and $s_{k,i}$ is obtained by performing linear transformation on $b_{k,i}$ and $b_{k,i}^*$. It can be learned that the terminal device maps $m_k$ streams of first data $b_{k,i}$ and conjugates $b_{k,i}^*$ of the $m_k$ streams of first data to $m_k$ streams of third data $s_{k,i}$ in a one-to-one manner based on the first mapping parameter $\alpha$ and the second mapping parameter $\beta$.

**In** an optional implementation, the first signal is a proper Gaussian signal. That is, the first signal meets that I and Q channels are independently co-distributed, or a pseudo covariance of the first signal is zero. For example, the first signal $b_{k,i}$ is a complex modulation signal modulated through 4 quadrature amplitude modulation (4 quadrature amplitude modulation, 4QAM), a modulation constellation diagram of the first signal is four constellation points of $\left\{\frac{1}{\sqrt{2}}(\pm 1 \pm j)\right\}$, and the first signal meets independent co-distribution of I and Q channels. In addition, it may be determined that a pseudo covariance of the first signal is $E(b_k b_k{}^T) = 0$, where $b_k{}^T$ is a transpose of $b_k$.

When the first signal is a proper Gaussian signal, the terminal device converts the first signal and the conjugate of the first signal, to obtain a second signal that is an improper Gaussian signal. For example, the first signal $b_k$ is a complex modulation signal modulated through 4QAM, and is a proper Gaussian signal. The second signal $s_{k,i}$ is $s_{k,i} = \alpha_{i,k} b_{k,i} + \beta_{i,k} b_{k,i}{}^*$, and therefore, a modulation constellation diagram of the second signal $s_{k,i}$ is $\left\{\frac{1}{\sqrt{2}}(\pm(\alpha_{i,k} + \beta_{i,k}) \pm (\alpha_{i,k} - \beta_{i,k})j)\right\}$. It can be learned that, if a real part and an imaginary part of $s_{k,i}$ are different, an I channel and a Q channel of $s_{k,i}$ do not meet the feature of independent co-distribution. In addition, the pseudo covariance of $s_{k,i}$ may be expressed as:

$$E\left(s_k s_k{}^T\right) = E \begin{bmatrix} s_{k,1}s_{k,1} & s_{k,1}s_{k,2} & \cdots & \cdots \\ s_{k,2}s_{k,1} & s_{k,2}s_{k,2} & \cdots & \cdots \\ \cdots & \cdots & \cdots & \cdots \\ \cdots & \cdots & \cdots & s_{k,m}s_{k,m} \end{bmatrix} \neq 0 \tag{7}$$

Therefore, $s_{k,i}$ meets that a pseudo covariance is not zero, and the second signal $s_{k,i}$ is an improper Gaussian signal.

S12. The terminal device $k$ performs widely linear processing on a third data stream $s_{k,i}$ and a conjugate $s_{k,i}$ of the third data stream based on the first widely linear processing matrix $T_{1,k}$ and the second widely linear processing matrix $T_{1,k}$, to obtain a second signal $x_k$.

$x_k$ is a vector of $N_k * 1$, $N_k$ is a quantity of antennas of the terminal device $k$, or is a quantity of transmit channels. N may be 1, indicating single-antenna or single-channel transmission. $T_{1,k}$ and $T_{2,k}$ are matrices of $N_k * m_k$ separately.

$x_k$ is obtained through linear transformation of $s_k$ and $s_k{}^*$. That is:

$$x_k = T_{1,k} s_k + T_{2,k} s_k{}^* \tag{8}$$

Because $s_k$ meets an improper Gaussian feature, $x_k$ also meets the improper Gaussian feature, that is, $x_k$ is also an improper Gaussian signal.

Optionally, the first signal is an improper Gaussian signal. For example, the first signal is a QPSK signal. After mapping processing and widely linear processing are performed on the first signal, the obtained second signal is also an improper Gaussian signal.

S13. The terminal device sends the second signal on $N_k$ antennas.

S14. The network device receives the second signal based on $M$ antennas.

A signal (namely, the third signal) of the terminal device $k$ received by the network device may be represented as:

$$y = Hx + n = \sum_{i=1}^{K}(H_i T_{1,i} s_i + H_i T_{2,i} s_i{}^*) + n = (H_k T_{1,k} s_k + H_k T_{2,k} s_k{}^*) + \sum_{i \neq k}(HT_{1,i} s_i + HT_{2,i} s_i{}^*) + n \tag{9}$$

$H_i$ is a matrix of $M * N_i$, and represents a channel from a terminal device $i$ to the network device. The network device performs widely linear processing on the received third signal $y$ of the terminal device $k$ and the conjugate of the third signal by using a widely linear minimum mean square error algorithm, and may obtain the following estimation of $s_k$:

$$\tilde{s}_k = R_{1,k} y + R_{2,k} y{}^* \tag{10}$$

$R_{1,k}$ and $R_{2,k}$ are matrices of $m_k * M$, and may be obtained by using the following minimum mean square error algorithm:

$$\{R_{1,k}, R_{2,k}\} = \arg\min \left\| R_{1,k} y + R_{2,k} y{}^* - s_k \right\|^2 \tag{11}$$

The network device receives the third signal of the terminal device $k$ by using the widely linear minimum mean square error algorithm, which can reduce calculation complexity compared with a maximum likelihood algorithm.

Then, the network device performs demapping processing on $\tilde{s}_k$ estimated by the terminal device $k$, to restore $m_k$ streams of modulation signals of the terminal device $k$. The demapping processing may be obtained by using a maximum likelihood algorithm from a single symbol to a single symbol, that is, the estimated first data of the terminal device $k$ is:

$$\tilde{b}_{k,l} = \arg\min \left\| \alpha_{i,k} b_{k,l} + \beta_{i,k} b_{k,l}{}^* - \tilde{s}_{k,l} \right\|^2 \tag{12}$$

$1 \leq i \leq m_k$. Therefore, the network device may form a one-to-one demapping process from $\tilde{s}_k$ to $\tilde{b}_k$. Joint demapping processing is not required between multi-stream data. Even if a single-point maximum likelihood algorithm is used in single-stream demapping processing, processing complexity can still be reduced. Therefore, the network device can resist multi-user interference on a premise of low complexity.

In other words, as shown in FIG. 6, the network device performs widely linear processing on a received signal, and then performs demapping processing on a signal obtained through the widely linear processing, to obtain multi-stream data sent by each terminal device.

It can be learned that in this embodiment of this application, the first indication information sent by the network device is for determining the mapping parameter and the widely linear processing matrix, so that the second signal received by the network device is obtained by the terminal device by mapping the $m$ streams of first data in the to-be-sent first signal and the conjugates of the $m$ streams of first data based on the determined mapping parameter and the widely linear processing matrix, and then performing widely linear processing on a mapped signal and a conjugate of the mapped signal based on the widely linear processing matrix. In this way, a degree of freedom of the second signal can be improved, to improve a capability of the network device to resist multi-user interference.

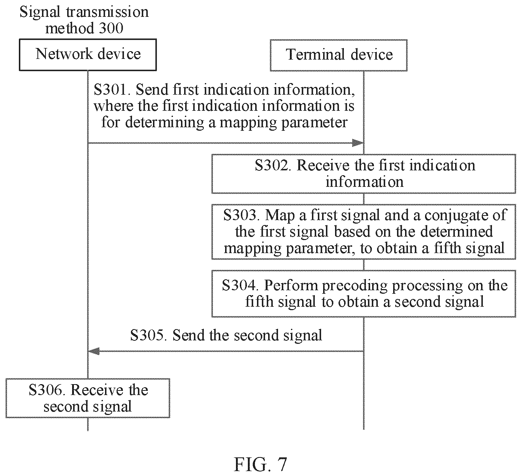

In an embodiment of this application, an example in which first indication information sent by a network device is for determining a mapping parameter is further used to provide a signal transmission method 300. FIG. 7 is a diagram of interaction of the signal transmission method 300. The signal transmission method 300 includes but is not limited to the following steps.

S301. A network device sends first indication information, where the first indication information is for determining a mapping parameter.

The mapping parameter includes a first mapping parameter of $m$ streams of first data and a second mapping parameter of conjugates of the $m$ streams of first data. The $m$ streams of first data are data streams in a first signal to be sent by a terminal device, and the first data is a complex modulation signal. $m$ is an integer greater than or equal to 1.

For an implementation in which the first indication information is for determining the mapping parameter, refer to S101. Details are not described again.

S302. The terminal device receives the first indication information.

S303. The terminal device maps the first signal and a conjugate of the first signal based on the determined mapping parameter, to obtain a fifth signal.

For S303, refer to S203. Details are not described again.

S304. The terminal device performs precoding processing on the fifth signal to obtain a second signal.

The terminal device performs precoding processing on the fifth signal based on a precoding matrix, and maps the fifth signal to $N$ antennas of the terminal device, to obtain the second signal, where the second signal includes $N$ streams of data. $N$ is an integer greater than or equal to 1.

The precoding matrix is sent by the network device to the terminal device. For example, the network device sends the precoding matrix to the terminal device by using higher layer signaling.

S305. The terminal device sends the second signal.

S306. The network device receives the second signal.

That the network device receives the second signal includes: The network device performs linear transformation on a received third signal, to obtain a fourth signal. The network device performs demapping processing on the fourth signal to obtain the second signal. The third signal is a signal obtained based on the second signal passing through a channel.

It can be learned that in this implementation, the network device performs linear transformation on a received signal to obtain the estimated second signal, and then performs demapping processing on the estimated second signal to obtain $m$ streams of data sent by the terminal device. A manner in which the network device performs demapping processing on the estimated second signal is the same as the manner of the demapping processing in S206.

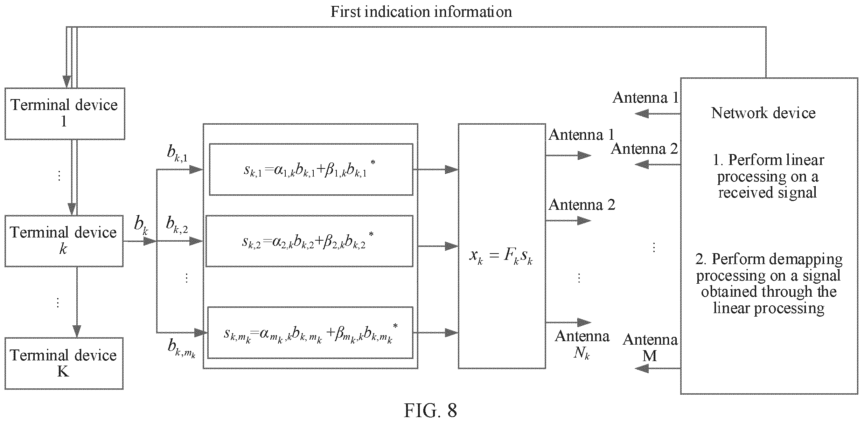

In this embodiment of this application, for a diagram of the signal transmission method 300, refer to FIG. 8. As shown in FIG. 8, the network device separately sends the first indication information to K terminal devices. The first indication information of each terminal device is for determining a mapping parameter of the terminal device. For any terminal device $k$, the mapping parameter of the terminal device $k$ includes $m$ first mapping parameters $\alpha$ for mapping $m_k$

pieces of first stream data $b_k$ in the to-be-sent first signal, and $m_k$ second mapping parameters $\beta$ for mapping conjugates $b_k^*$ of the $m$ pieces of first stream data. The network device may further indicate the precoding matrix $F_k$ to the terminal device $k$ by using indication information other than the first indication information. The following is a processing procedure of the terminal device $k$ and the network device.

S21. The terminal device $k$ maps the $m_k$ first data streams $b_k$ and the conjugates $b_k^*$ of the $m_k$ first data streams based on the first mapping parameter $\alpha$ and the second mapping parameter $\beta$, to obtain $m_k$ third data streams $s_k$.

For an implementation of S21, refer to the implementation of S11. Details are not described again.

S22. The terminal device performs precoding processing on the $m_k$ third data streams $s_k$ based on the precoding matrix to obtain a second signal $x_k$.

The precoding matrix $F_k$ is a matrix of $m_k *N_k$, and $N_k$ is a quantity of antennas of the terminal device $k$.

The second signal $x_k$ may be obtained by using the following formula (11):

$$x_k = F_k * s_k \qquad (13)$$

S23. The terminal device sends the second signal on $N_k$ antennas.

S24. The network device receives the second signal based on $M$ antennas.

A signal of the terminal device $k$ that is received by the network device is a third signal $y$, and the network device performs linear transformation on the third signal to obtain an estimated second signal $\tilde{s}_k$, where $\tilde{s}_k$ is:

$$\tilde{s}_k = G_k y \qquad (14)$$

$G_k$ is a linear transformation coefficient determined according to a linear algorithm.

Then, the network device performs demapping processing on the estimated second signal $\tilde{s}_k$, to obtain an estimation of $m_k$ streams of modulation signals of the terminal device $k$. For a process in which the network device performs demapping processing on the estimated second signal $\tilde{s}_k$, refer to the foregoing formula (10). Details are not described again.

In other words, as shown in FIG. 8, the network device performs linear processing on a received signal, and then performs demapping processing on a signal obtained through the linear processing, to obtain multi-stream data sent by each terminal device.

It can be learned that in this embodiment of this application, the first indication information sent by the network device is for determining the mapping parameter, so that the second signal received by the network device is obtained by the terminal device by mapping the $m$ streams of first data in the to-be-sent first signal and the conjugates of the $m$ streams of first data based on the determined mapping parameter. In this manner, a degree of freedom of the second signal can also be improved, so that a capability of the network device to resist multi-user interference can be improved.

Compared with the foregoing signal transmission method 200, in this embodiment of this application, the terminal device determines the mapping parameter based on the first indication information, and does not determine a widely linear processing matrix. Therefore, the terminal device does not need to perform widely linear processing. Similarly, the network device does not need to perform widely linear processing when receiving the second signal, so that processing complexity can be reduced.

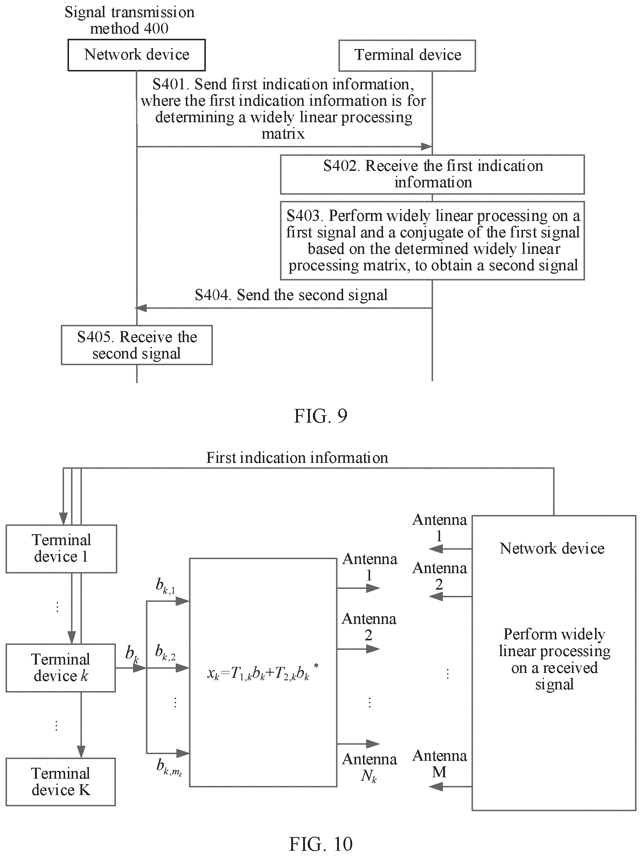

In an embodiment of this application, an example in which first indication information sent by a network device is for determining a mapping and a widely linear processing matrix is further used to provide a signal transmission method 400. FIG. 9 is a diagram of interaction of the signal transmission method 400. The signal transmission method 400 includes but is not limited to the following steps.

S401. A network device sends first indication information, where the first indication information is for determining a widely linear processing matrix.

The widely linear processing matrix includes a first widely linear processing matrix of $m$ streams of second data and a second widely linear processing matrix of conjugates of the $m$ streams of second data. The $m$ streams of second data are $m$ streams of first data, the $m$ streams of first data are data streams in a first signal to be sent by a terminal device, and the first data is a complex modulation signal.

When the first indication information is for determining the widely linear processing matrix, for an implementation of the first indication information, refer to S101. Details are not described again.

S402. The terminal device receives the first indication information.

S403. The terminal device performs widely linear processing on the first signal and a conjugate of the first signal based on the determined widely linear processing matrix, to obtain a second signal.

For an implementation in which the terminal device determines the first widely linear processing matrix and the second widely linear processing matrix based on the first indication information, refer to the descriptions in S103. Details are not described again.

Both the first widely linear processing matrix and the second widely linear processing matrix are matrices of $M*N$, where $M$ is a quantity of antennas of the network device, and $N_k$ is a quantity of antennas of the terminal device.

It can be learned that the terminal device maps the $m$ streams of first data to the $N_k$ antennas based on the first widely linear processing matrix and the second widely linear processing matrix, so that the terminal device can send the second signal on the $N_k$ antennas.

S404. The terminal device sends the second signal.

S405. The network device receives the second signal.

The second signal is obtained by the terminal device by converting the first signal and the conjugate of the first signal based on the first widely linear processing matrix and the second widely linear processing matrix. Therefore, that the network device receives the second signal includes: performing widely linear processing on a received third signal to obtain an estimation of a data stream in the second signal. The third signal is a signal obtained based on the second signal passing through a channel.

In this embodiment of this application, for a diagram of the signal transmission method 400, refer to FIG. 10. As shown in FIG. 10, the network device separately sends the first indication information to $K$ terminal devices. The first indication information of each terminal device is for determining a widely linear processing matrix of the terminal device. A widely linear processing matrix of a terminal device $k$ includes a first widely linear processing matrix $T_{1,k}$ for performing widely linear processing on $m_k$ pieces of first stream data $b_k$ and a second widely linear processing matrix $T_{2,k}$ for performing widely linear processing on conjugates $b_k^*$ of the $m_k$ pieces of second data. A processing procedure of the terminal device $k$ and the network device is as follows:

S31. The terminal device $k$ performs widely linear processing on a first signal $b_k$ and a conjugate $b_k^*$ of the first signal based on the first widely linear processing matrix $T_{1,k}$ and the second widely linear processing matrix $T_{2,k}$, to obtain a second signal $x_k$. The second signal $x_k$ may be represented as:

$$x_k = T_{1,k} b_k + T_{2,k} b_k^*$$ (15)

The second signal $x_k$ includes $N_k$ pieces of data.

S32. The terminal device $k$ sends the second signal on $N_k$ antennas.

S33. The network device receives the second signal based on $M$ antennas.

That the network device receives the second signal includes: The network device performs widely linear processing on the received third signal to obtain an estimation of a data stream in the second signal. If the third signal of the terminal device $k$ that is received by the network device is $y$, the data stream $\tilde{b}$ of the second signal that is estimated by the network device is:

$$\tilde{b} = R_{1,k} y + R_{2,k} y^*$$ (16)

$R_{1,k}$ and $R_{2,k}$ are widely linear processing matrices for performing widely linear processing, and the processing matrices may be predefined by the network device.

In other words, as shown in FIG. 10, the network device may directly perform widely linear processing on a received signal, to obtain multi-stream data sent by each terminal device.

It can be learned that in this embodiment of this application, the first indication information sent by the network device is for determining the widely linear processing matrix, so that the second signal received by the network device is obtained by the terminal device by performing widely linear processing on the $m$ streams of first data in the to-be-sent first signal and the conjugates of the $m$ streams of first data based on the determined widely linear processing matrix. In this manner, a degree of freedom of the second signal can also be improved, so that a capability of the network device to resist multi-user interference can be improved.

Compared with the foregoing signal transmission method 100, in this embodiment of this application, the terminal device does not need to map the first signal and the conjugate of the first signal, and the network device does not need to perform demapping processing on a received signal, thereby reducing processing complexity.

III. Apparatus Embodiment

To implement functions in the methods provided in the foregoing embodiments of this application, the terminal device or the network device may include a hardware structure and/or a software module, and the foregoing functions are implemented in a form of a hardware structure, a software module, or a combination of a hardware structure and a software module. Whether a function in the foregoing functions is performed by using the hardware structure, the software module, or the combination of the hardware structure and the software module depends on particular applications and design constraints of the technical solutions.

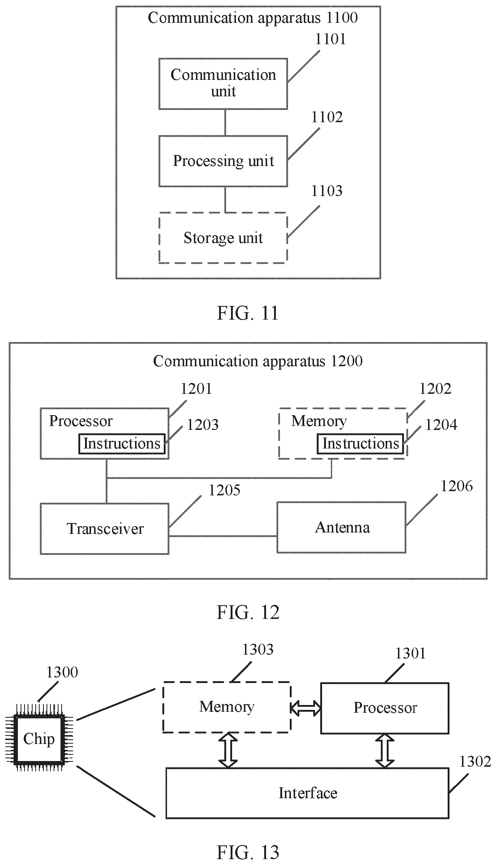

As shown in FIG. 11, an embodiment of this application provides a communication apparatus 1100. The communication apparatus 1100 may be a component (for example, an integrated circuit or a chip) of a terminal device, or may be a component (for example, an integrated circuit or a chip) of a network device. Alternatively, the communication apparatus 1100 may be another transceiver unit, configured to implement the methods in the method embodiments of this application. The communication apparatus 1100 may include a communication unit 1101 and a processing unit 1102. Optionally, the apparatus may further include a storage unit 1103.

In a possible design, for example, one or more units in FIG. 11 may be implemented by one or more processors, may be implemented by one or more processors and memories, may be implemented by one or more processors and transceivers, or may be implemented by one or more processors, memories, and transceivers. This is not limited in this embodiment of this application. The processor, the memory, and the transceiver may be disposed separately, or may be integrated.

The communication apparatus 1100 has a function of implementing the terminal device described in embodiments of this application. Optionally, the communication apparatus 1100 has a function of implementing the network device described in embodiments of this application. For example, the communication apparatus 1100 includes a module, a unit, or a means (means) corresponding to a terminal device performing the steps related to a transmitting end described in embodiments of this application. The function, the unit, or the means (means) may be implemented by software or hardware, may be implemented by hardware executing corresponding software, or may be implemented by a combination of software and hardware. For details, further refer to the corresponding descriptions in the foregoing corresponding method embodiments.

In a possible design, the communication apparatus 1100 may include a processing unit 1102 and a communication unit 1101. The processing unit 1102 is configured to control the communication unit 1101 to perform data/signaling receiving and sending.

The communication unit 1101 is configured to receive first indication information, where the first indication information is for determining at least one of a mapping parameter and a widely linear processing matrix.

The communication unit 1101 is further configured to send a second signal, where the second signal is obtained by converting a first signal based on at least one of the mapping parameter and the widely linear processing matrix, and the first signal includes $m$ streams of first data to be sent by a terminal device.

The mapping parameter includes a first mapping parameter of the $m$ streams of first data and a second mapping parameter of conjugates of the $m$ streams of first data, the widely linear processing matrix includes a first widely linear processing matrix of $m$ streams of second data and a second widely linear processing matrix of conjugates of the $m$ streams of second data, and $m$ is an integer greater than or equal to 1.

In an optional implementation, the $m$ streams of second data are the $m$ streams of first data, or are $m$ streams of data obtained by mapping the $m$ streams of first data and the conjugates of the $m$ streams of first data based on the first mapping parameter and the second mapping parameter.

In an optional implementation, the first signal is a proper Gaussian signal, and the second signal is an improper Gaussian signal.

In an optional implementation, the first indication information includes first amplitude information and phase information. The first amplitude information indicates amplitude information of the first mapping parameter, indicates amplitude information of the second mapping parameter, or indicates a relative relationship between amplitude information of the first mapping parameter and amplitude information of the second mapping parameter. The phase information indicates phase information of the first mapping parameter and phase information of the second mapping parameter.

In an optional implementation, the phase information includes first phase information and second phase information. The first phase information indicates the phase information of the first mapping parameter, and the second phase information indicates the phase information of the second mapping parameter; or the first phase information indicates reference phase information, and the second phase information indicates differential phase information.

In an optional implementation, at least two of phase information of the first mapping parameter, phase information of the second mapping parameter, amplitude information of the first mapping parameter, and amplitude information of the second mapping parameter are jointly encoded in the first indication information.

In an optional implementation, the first indication information includes codebook index information and second amplitude information. The codebook index information indicates a codebook index, and the codebook index is for determining the first widely linear processing matrix and the second widely linear processing matrix. The second amplitude information indicates at least one of an amplitude of the first widely linear processing matrix and an amplitude of the second widely linear processing matrix.

In an optional implementation, the first indication information is for determining the first mapping parameter, the second mapping parameter, the first widely linear processing matrix, and the second widely linear processing matrix. The second signal is obtained by the terminal device by performing widely linear processing on $m$ streams of third data and conjugates of the $m$ streams of third data based on the first widely linear processing matrix and the second widely linear processing matrix. The $m$ streams of third data are obtained by the terminal device by mapping the $m$ streams of first data and the conjugates of the *m* streams of first data based on the first mapping parameter and the second mapping parameter.

This embodiment of this application and the foregoing method embodiment are based on a same concept, and bring same technical effect. For a specific principle, refer to the descriptions of the foregoing embodiment. Details are not described again.

In another possible design, the communication apparatus 1100 may include a processing unit 1102 and a communication unit 1101. The processing unit 1102 is configured to control the communication unit 1101 to perform data/signaling receiving and sending.

The communication unit 1101 is configured to send first indication information, where the first indication information is for determining at least one of a mapping parameter and a widely linear processing matrix.

The communication unit 1101 is further configured to receive a second signal, where the second signal is obtained by converting a first signal based on at least one of the mapping parameter and the widely linear processing matrix, and the first signal includes *m* streams of first data to be sent by a terminal device.

The mapping parameter includes a first mapping parameter of the *m* streams of first data and a second mapping parameter of conjugates of the *m* streams of first data, the widely linear processing matrix includes a first widely linear processing matrix of *m* streams of second data and a second widely linear processing matrix of conjugates of the *m* streams of second data, and *m* is an integer greater than or equal to 1.

In an optional implementation, the *m* streams of second data are the *m* streams of first data, or are *m* streams of data obtained by mapping the *m* streams of first data and the conjugates of the *m* streams of first data based on the first mapping parameter and the second mapping parameter.

In an optional implementation, the first signal is a proper Gaussian signal, and the second signal is an improper Gaussian signal.

In an optional implementation, the first indication information includes first amplitude information and phase information. The first amplitude information indicates amplitude information of the first mapping parameter, indicates amplitude information of the second mapping parameter, or indicates a relative relationship between amplitude information of the first mapping parameter and amplitude information of the second mapping parameter. The phase information indicates phase information of the first mapping parameter and phase information of the second mapping parameter.

In an optional implementation, the phase information includes first phase information and second phase information.

The first phase information indicates the phase information of the first mapping parameter, and the second phase information indicates the phase information of the second mapping parameter; or the first phase information indicates reference phase information, and the second phase information indicates differential phase information.

In an optional implementation, at least two of phase information of the first mapping parameter, phase information of the second mapping parameter, amplitude information of the first mapping parameter, and amplitude information of the second mapping parameter are jointly encoded in the first indication information.

In an optional implementation, the first indication information includes codebook index information and second amplitude information.

The codebook index information indicates a codebook index, and the codebook index is for determining the first widely linear processing matrix and the second widely linear processing matrix. The second amplitude information indicates at least one of an amplitude of the first widely linear processing matrix and an amplitude of the second widely linear processing matrix.

In an optional implementation, the first indication information is for determining the first mapping parameter, the second mapping parameter, the first widely linear processing matrix, and the second widely linear processing matrix. The processing unit 1102 is further configured to: perform widely linear processing on a received third signal and a conjugate of the third signal, to obtain a fourth signal, where the third signal is a signal obtained based on the second signal passing through a channel; and perform demapping processing on the fourth signal to obtain the second signal.

This embodiment of this application and the foregoing method embodiment are based on a same concept, and bring same technical effect. For a specific principle, refer to the descriptions of the foregoing embodiment. Details are not described again.

An embodiment of this application further provides a communication apparatus 1200. FIG. 12 is a diagram of a structure of the communication apparatus 1200. The communication apparatus 1200 may be a terminal device or a network device, may be a chip, a chip system, a processor, or the like that supports the terminal device in implementing the foregoing method, or may be a chip, a chip system, a processor, or the like that supports the network device in implementing the foregoing method. The apparatus may be configured to implement the methods described in the foregoing method embodiments. For details, refer to the descriptions in the foregoing method embodiments.

The communication apparatus 1200 may include one or more processors 1201. The processor 1201 may be a general-purpose processor, a dedicated processor, or the like. For example, the processor may be a baseband processor, a digital signal processor, an application-specific integrated circuit, a field programmable gate array or another programmable logic device, a discrete gate or a transistor logic device, a discrete hardware component, or a central processing unit (Central Processing Unit, CPU). The baseband processor may be configured to process a communication protocol and communication data. The central processing unit may be configured to control the communication apparatus (for example, a base station, a baseband chip, a terminal, a terminal chip, a distributed unit (distributed unit, DU), or a central unit (central unit, CU)), execute a software program, and process data of the software program.

Optionally, the communication apparatus 1200 may include one or more memories 1202. The memory may store instructions 1204, and the instructions may be run on the processor 1201, to enable the communication apparatus 1200 to perform the methods described in the foregoing method embodiments. Optionally, the memory 1202 may further store data. The processor 1201 and the memory 1202 may be separately disposed, or may be integrated together.

The memory 1202 may include but is not limited to a non-volatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a ROM, a portable read-only memory (Compact Disc Read-Only Memory, CD-ROM), or the like.

Optionally, the communication apparatus 1200 may further include a transceiver 1205 and an antenna 1206. The transceiver 1205 may be referred to as a communication unit, a transceiver unit, a transceiver machine, a transceiver circuit, or the like, and is configured to implement a transceiver function. The transceiver 1205 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a transmitting function.

The communication apparatus 1200 is a terminal device. The transceiver 1205 is configured to perform S102 and S103 in the signal transmission method 100, configured to perform S202 and S205 in the signal transmission method 200, configured to perform S302 and S305 in the signal transmission method 300, and configured to perform S402 and S404 in the signal transmission method 400. The processor 1201 is configured to perform S203 and S204 in the signal transmission method 200, configured to perform S303 and S304 in the signal transmission method 300, and configured to perform S403 in the signal transmission method 400.

The communication apparatus 1200 is a network device. The transceiver 1205 is configured to perform S101 and S104 in the signal transmission method 100, configured to perform S201 and S206 in the signal transmission method 200, configured to perform S301 and S306 in the signal transmission method 300, and configured to perform S401 and S405 in the signal transmission method 100.

In another possible design, the processor 1201 may include a transceiver configured to implement receiving and sending functions. For example, the transceiver may be a transceiver circuit, an interface, or an interface circuit. Transceiver circuits, interfaces, or interface circuits configured to implement receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In another possible design, optionally, the processor 1201 may store instructions 1203. When the instructions 1203 are executed on the processor 1201, the communication apparatus 1200 is enabled to perform the methods described in the foregoing method embodiments. The instructions 1203 may be built into the processor 1201. In this case, the processor 1201 may be implemented by hardware.

In still another possible design, the communication apparatus 1200 may include a circuit. The circuit may implement a sending, receiving, or communication function in the foregoing method embodiments. The processor and the transceiver described in embodiments of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-channel metal oxide semiconductor (nMetal-oxide-semiconductor, NMOS), a P-channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The communication apparatus described in the foregoing embodiments may be a first communication apparatus or a second communication apparatus. However, a scope of the communication apparatus described in embodiments of this application is not limited thereto, and a structure of the communication apparatus may not be limited by FIG. 12. The communication apparatus may be an independent device or may be a part of a large device. For example, the communication apparatus may be:

(1) an independent integrated circuit IC, a chip, or a chip system or subsystem;
(2) a set that has one or more ICs, where optionally, the IC set may alternatively include a storage component configured to store data and instructions;
(3) an ASIC, like a modem (modulator);

(4) a module that can be embedded in another device;

(5) a receiver, a terminal, an intelligent terminal, a cellular phone, a wireless device, a handheld device, a mobile unit, a vehicle-mounted device, a network device, a cloud device, an artificial intelligence device, or the like; or

(6) others.

When the communication apparatus may be the chip or the chip system, refer to a diagram of a structure of a chip, namely, FIG. 13. A chip 1300 shown in FIG. 13 includes a processor 1301 and an interface 1302. There may be one or more processors 1301, and there may be a plurality of interfaces 1302. The processor 1301 may be a logic circuit, and the interface 1302 may be an input/output interface, an input interface, or an output interface. The chip 1300 may further include a memory 1303.

In a design, when the chip is configured to implement a function of the terminal device in embodiments of this application:

The interface 1302 is configured to receive first indication information, where the first indication information is for determining at least one of a mapping parameter and a widely linear processing matrix.

The interface 1302 is further configured to send a second signal, where the second signal is obtained by converting a first signal based on at least one of the mapping parameter and the widely linear processing matrix, and the first signal includes $m$ streams of first data to be sent by the terminal device.

The mapping parameter includes a first mapping parameter of the $m$ streams of first data and a second mapping parameter of conjugates of the $m$ streams of first data, the widely linear processing matrix includes a first widely linear processing matrix of $m$ streams of second data and a second widely linear processing matrix of conjugates of the $m$ streams of second data, and $m$ is an integer greater than or equal to 1.

In another design, when the chip is configured to implement a function of the network device in embodiments of this application:

The interface 1302 is configured to send first indication information, where the first indication information is for determining at least one of a mapping parameter and a widely linear processing matrix.

The interface 1302 is further configured to receive a second signal, where the second signal is obtained by converting a first signal based on at least one of the mapping parameter and the widely linear processing matrix, and the first signal includes $m$ streams of first data to be sent by a terminal device.

The mapping parameter includes a first mapping parameter of the $m$ streams of first data and a second mapping parameter of conjugates of the $m$ streams of first data, the widely linear processing matrix includes a first widely linear processing matrix of $m$ streams of second data and a second widely linear processing matrix of conjugates of the $m$ streams of second data, and $m$ is an integer greater than or equal to 1.

In embodiments of this application, the communication apparatus 1200 and the chip 1300 may further perform the implementation of the communication apparatus 1100. A person skilled in the art may further understand that various illustrative logical blocks (illustrative logic block) and steps (step) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the scope of embodiments of this application.

This embodiment of this application and the method embodiments of the foregoing signal transmission method 100 to signal transmission method 400 are based on a same concept, and bring same technical effect. For a specific principle, refer to the descriptions of the embodiments of the foregoing signal transmission method 100 to signal transmission method 400. Details are not described again.

This application further provides a computer-readable storage medium, configured to store computer software instructions. When the instructions are executed by a communication apparatus, a function in any one of the foregoing method embodiments is implemented.

This application further provides a computer program product, configured to store computer software instructions. When the instructions are executed by a communication apparatus, a function in any one of the foregoing method embodiments is implemented.

This application further provides a computer program. When the computer program is run on a computer, a function in any one of the foregoing method embodiments is implemented.

This application further provides a communication system. The system includes at least one network device and at least one terminal device in the foregoing aspects. In another possible design, the system may further include another device that interacts with the network device and the terminal device in the solutions provided in this application.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions.

When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, an SSD), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A signal transmission method, wherein the method comprises:

    receiving, by a terminal device, first indication information, wherein the first indication information is for determining at least one of a mapping parameter and a widely linear processing matrix; and
    sending, by the terminal device, a second signal, wherein the second signal is obtained by converting a first signal based on at least one of the mapping parameter and the widely linear processing matrix, and the first signal comprises $m$ streams of first data to be sent by the terminal device, wherein
    the mapping parameter comprises a first mapping parameter of the $m$ streams of first data and a second mapping parameter of conjugates of the $m$ streams of first data, the widely linear processing matrix comprises a first widely linear processing matrix of $m$ streams of second data and a second widely linear processing matrix of conjugates of the $m$ streams of second data, and $m$ is an integer greater than or equal to 1.

2.  The method according to claim 1, wherein the $m$ streams of second data are the $m$ streams of first data, or are $m$ streams of data obtained by mapping the $m$ streams of first data and the conjugates of the $m$ streams of first data based on the first mapping parameter and the second mapping parameter.

3.  The method according to claim 1 or 2, wherein the first signal is a proper Gaussian signal, and the second signal is an improper Gaussian signal.

4.  The method according to any one of claims 1 to 3, wherein the first indication information comprises first amplitude information and phase information, wherein

    the first amplitude information indicates amplitude information of the first mapping parameter, indicates amplitude information of the second mapping parameter, or indicates a relative relationship between amplitude information of the first mapping parameter and amplitude information of the second mapping parameter; and
    the phase information indicates phase information of the first mapping parameter and phase information of the second mapping parameter.

5.  The method according to claim 4, wherein the phase information comprises first phase information and second phase information, wherein

    the first phase information indicates the phase information of the first mapping parameter, and the second phase information indicates the phase information of the second mapping parameter; or
    the first phase information indicates reference phase information, and the second phase information indicates differential phase information.

6.  The method according to any one of claims 1 to 3, wherein
    at least two of phase information of the first mapping parameter, phase information of the second mapping parameter, amplitude information of the first mapping parameter, and amplitude information of the second mapping parameter are jointly encoded in the first indication information.

7. The method according to any one of claims 1 to 6, wherein the first indication information comprises codebook index information and second amplitude information, wherein

the codebook index information indicates a codebook index, and the codebook index is for determining the first widely linear processing matrix and the second widely linear processing matrix; and
the second amplitude information indicates at least one of an amplitude of the first widely linear processing matrix and an amplitude of the second widely linear processing matrix.

8. The method according to any one of claims 1 to 7, wherein the first indication information is for determining the first mapping parameter, the second mapping parameter, the first widely linear processing matrix, and the second widely linear processing matrix;

the second signal is obtained by the terminal device by performing widely linear processing on $m$ streams of third data and conjugates of the $m$ streams of third data based on the first widely linear processing matrix and the second widely linear processing matrix; and
the $m$ streams of third data are obtained by the terminal device by mapping the $m$ streams of first data and the conjugates of the $m$ streams of first data based on the first mapping parameter and the second mapping parameter.

9. A signal transmission method, wherein the method comprises:

sending, by a network device, first indication information, wherein the first indication information is for determining at least one of a mapping parameter and a widely linear processing matrix; and
receiving, by the network device, a second signal, wherein the second signal is obtained by converting a first signal based on at least one of the mapping parameter and the widely linear processing matrix, and the first signal comprises $m$ streams of first data to be sent by a terminal device, wherein
the mapping parameter comprises a first mapping parameter of the $m$ streams of first data and a second mapping parameter of conjugates of the $m$ streams of first data, the widely linear processing matrix comprises a first widely linear processing matrix of $m$ streams of second data and a second widely linear processing matrix of conjugates of the $m$ streams of second data, and $m$ is an integer greater than or equal to 1.

10. The method according to claim 9, wherein the $m$ streams of second data are the $m$ streams of first data, or are $m$ streams of data obtained by mapping the $m$ streams of first data and the conjugates of the $m$ streams of first data based on the first mapping parameter and the second mapping parameter.

11. The method according to claim 9 or 10, wherein the first signal is a proper Gaussian signal, and the second signal is an improper Gaussian signal.

12. The method according to any one of claims 9 to 11, wherein the first indication information comprises first amplitude information and phase information, wherein

the first amplitude information indicates amplitude information of the first mapping parameter, indicates amplitude information of the second mapping parameter, or indicates a relative relationship between amplitude information of the first mapping parameter and amplitude information of the second mapping parameter; and
the phase information indicates phase information of the first mapping parameter and phase information of the second mapping parameter.

13. The method according to claim 12, wherein the phase information comprises first phase information and second phase information, wherein

the first phase information indicates the phase information of the first mapping parameter, and the second phase information indicates the phase information of the second mapping parameter; or
the first phase information indicates reference phase information, and the second phase information indicates differential phase information.

14. The method according to any one of claims 9 to 11, wherein at least two of phase information of the first mapping parameter, phase information of the second mapping parameter, amplitude information of the first mapping parameter, and amplitude information of the second mapping parameter are jointly encoded in the first indication information.

15. The method according to any one of claims 9 to 14, wherein the first indication information comprises codebook index information and second amplitude information, wherein

the codebook index information indicates a codebook index, and the codebook index is for determining the first widely linear processing matrix and the second widely linear processing matrix; and
the second amplitude information indicates at least one of an amplitude of the first widely linear processing matrix and an amplitude of the second widely linear processing matrix.

16. The method according to any one of claims 9 to 15, wherein the first indication information is for determining the first mapping parameter, the second mapping parameter, the first widely linear processing matrix, and the second widely linear processing matrix; and
the receiving, by the network device, a second signal comprises:

performing, by the network device, widely linear processing on a received third signal and a conjugate of the third signal, to obtain a fourth signal, wherein the third signal is a signal obtained based on the second signal passing through a channel; and
performing, by the network device, demapping processing on the fourth signal to obtain the second signal.

17. A communication apparatus, wherein the apparatus comprises a processing unit and a communication unit, and the processing unit is configured to control the communication unit to perform data/signaling receiving and sending:

the communication unit is configured to receive first indication information, wherein the first indication information is for determining at least one of a mapping parameter and a widely linear processing matrix; and
the communication unit is further configured to send a second signal, wherein the second signal is obtained by converting a first signal based on at least one of the mapping parameter and the widely linear processing matrix, and the first signal comprises $m$ streams of first data to be sent by a terminal device, wherein
the mapping parameter comprises a first mapping parameter of the $m$ streams of first data and a second mapping parameter of conjugates of the $m$ streams of first data, the widely linear processing matrix comprises a first widely linear processing matrix of $m$ streams of second data and a second widely linear processing matrix of conjugates of the $m$ streams of second data, and $m$ is an integer greater than or equal to 1.

18. The apparatus according to claim 17, wherein the $m$ streams of second data are the $m$ streams of first data, or are $m$ streams of data obtained by mapping the $m$ streams of first data and the conjugates of the $m$ streams of first data based on the first mapping parameter and the second mapping parameter.

19. The apparatus according to claim 17 or 18, wherein the first signal is a proper Gaussian signal, and the second signal is an improper Gaussian signal.

20. The apparatus according to any one of claims 17 to 19, wherein the first indication information comprises first amplitude information and phase information, wherein

the first amplitude information indicates amplitude information of the first mapping parameter, indicates amplitude information of the second mapping parameter, or indicates a relative relationship between amplitude information of the first mapping parameter and amplitude information of the second mapping parameter; and
the phase information indicates phase information of the first mapping parameter and phase information of the second mapping parameter.

21. The apparatus according to claim 20, wherein the phase information comprises first phase information and second phase information, wherein

the first phase information indicates the phase information of the first mapping parameter, and the second phase information indicates the phase information of the second mapping parameter; or
the first phase information indicates reference phase information, and the second phase information indicates differential phase information.

22. The apparatus according to any one of claims 17 to 19, wherein
at least two of phase information of the first mapping parameter, phase information of the second mapping parameter, amplitude information of the first mapping parameter, and amplitude information of the second mapping parameter are jointly encoded in the first indication information.

23. The apparatus according to any one of claims 17 to 22, wherein the first indication information comprises codebook index information and second amplitude information, wherein

the codebook index information indicates a codebook index, and the codebook index is for determining the first widely linear processing matrix and the second widely linear processing matrix; and
the second amplitude information indicates at least one of an amplitude of the first widely linear processing matrix and an amplitude of the second widely linear processing matrix.

24. The apparatus according to any one of claims 17 to 23, wherein the first indication information is for determining the first mapping parameter, the second mapping parameter, the first widely linear processing matrix, and the second widely linear processing matrix; and

the second signal is obtained by the apparatus by performing widely linear processing on $m$ streams of third data and conjugates of the $m$ streams of third data based on the first widely linear processing matrix and the second widely linear processing matrix; and
the $m$ streams of third data are obtained by the apparatus by mapping the $m$ streams of first data and the conjugates of the $m$ streams of first data based on the first mapping parameter and the second mapping parameter.

25. A communication apparatus, wherein the apparatus comprises a processing unit and a communication unit, and the processing unit is configured to control the communication unit to perform data/signaling receiving and sending:

the communication unit is configured to send first indication information, wherein the first indication information is for determining at least one of a mapping parameter and a widely linear processing matrix; and
the communication unit is further configured to receive a second signal, wherein the second signal is obtained by converting a first signal based on at least one of the mapping parameter and the widely linear processing matrix, and the first signal comprises $m$ streams of first data to be sent by a terminal device, wherein
the mapping parameter comprises a first mapping parameter of the $m$ streams of first data and a second mapping parameter of conjugates of the $m$ streams of first data, the widely linear processing matrix comprises a first widely linear processing matrix of $m$ streams of second data and a second widely linear processing matrix of conjugates of the $m$ streams of second data, and $m$ is an integer greater than or equal to 1.

26. The apparatus according to claim 25, wherein the $m$ streams of second data are the $m$ streams of first data, or are $m$ streams of data obtained by mapping the $m$ streams of first data and the conjugates of the $m$ streams of first data based on the first mapping parameter and the second mapping parameter.

27. The apparatus according to claim 25 or 26, wherein the first signal is a proper Gaussian signal, and the second signal is an improper Gaussian signal.

28. The apparatus according to any one of claims 25 to 27, wherein the first indication information comprises first amplitude information and phase information, wherein

the first amplitude information indicates amplitude information of the first mapping parameter, indicates amplitude information of the second mapping parameter, or indicates a relative relationship between amplitude information of the first mapping parameter and amplitude information of the second mapping parameter; and
the phase information indicates phase information of the first mapping parameter and phase information of the second mapping parameter.

29. The apparatus according to claim 28, wherein the phase information comprises first phase information and second phase information, wherein

the first phase information indicates the phase information of the first mapping parameter, and the second phase information indicates the phase information of the second mapping parameter; or

the first phase information indicates reference phase information, and the second phase information indicates differential phase information.

30. The apparatus according to any one of claims 25 to 27, wherein at least two of phase information of the first mapping parameter, phase information of the second mapping parameter, amplitude information of the first mapping parameter, and amplitude information of the second mapping parameter are jointly encoded in the first indication information.

31. The apparatus according to any one of claims 25 to 30, wherein the first indication information comprises codebook index information and second amplitude information, wherein

the codebook index information indicates a codebook index, and the codebook index is for determining the first widely linear processing matrix and the second widely linear processing matrix; and
the second amplitude information indicates at least one of an amplitude of the first widely linear processing matrix and an amplitude of the second widely linear processing matrix.

32. The apparatus according to any one of claims 25 to 31, wherein the first indication information is for determining the first mapping parameter, the second mapping parameter, the first widely linear processing matrix, and the second widely linear processing matrix; and the processing unit is further configured to:

perform widely linear processing on a received third signal and a conjugate of the third signal, to obtain a fourth signal, wherein the third signal is a signal obtained based on the second signal passing through a channel; and
perform demapping processing on the fourth signal to obtain the second signal.

33. A communication apparatus, comprising a logic circuit and an input/output interface, wherein the input/output interface is configured to receive a signal from another communication apparatus than the communication apparatus and transmit the signal to the logic circuit, or send a signal from the logic circuit to another communication apparatus than the communication apparatus, and the logic circuit is configured to implement the method according to any one of claims 1 to 8, or is configured to implement the method according to any one of claims 9 to 16.

34. A computer-readable storage medium, wherein the computer-readable storage medium stores instructions; and when the instructions are run on a computer, the method according to any one of claims 1 to 8 is performed, or the method according to any one of claims 9 to 16 is performed.

35. A computer program product comprising instructions, wherein when the computer program product runs on a computer, the method according to any one of claims 1 to 8 is performed, or the method according to any one of claims 9 to 16 is performed.

FIG. 1

FIG. 2

Signal transmission
method 100

| Network device | | Terminal device |
|---|---|---|

S101. Send first indication information, where the
first indication information is for determining at
least one of a mapping parameter and a widely
linear processing matrix

S102. Receive the first
indication information

S103. Send a second signal, where the second
signal is obtained by converting a first signal
based on at least one of the mapping parameter
and the widely linear processing matrix, and the
first signal includes m streams of first data to be
sent by the terminal device

S104. Receive the
second signal

FIG. 3

| First amplitude information | Phase information |
|---|---|

FIG. 4(a)

| First amplitude information | First phase information | Second phase information |
|---|---|---|

FIG. 4(b)

Signal transmission
method 200

| Network device | | Terminal device |
| --- | --- | --- |

S201. Send first indication information,
where the first indication information is for
determining a mapping parameter and a
widely linear processing matrix

S202. Receive the first indication information

S203. Map a first signal and a conjugate of the
first signal based on the determined mapping
parameter, to obtain a fifth signal

S204. Perform widely linear processing on the
fifth signal based on the determined widely linear
processing matrix, to obtain a second signal

S205. Send the second signal

S206. Receive the
second signal

FIG. 5

First indication information

Terminal device 1

⋮

Terminal device $k$

⋮

Terminal device K

$b_k$

$b_{k,1}$

$b_{k,2}$

$b_{k,m_k}$

$s_{k,1}=\alpha_{1,k}b_{k,1}+\beta_{1,k}b_{k,1}{}^*$

$s_{k,2}=\alpha_{2,k}b_{k,2}+\beta_{2,k}b_{k,2}{}^*$

$s_{k,m_k}=\alpha_{m_k,k}b_{k,m_k}+\beta_{m_k,k}b_{k,m_k}{}^*$

$x_k=T_{1,k}s_k$ $+T_{2,k}s_k{}^*$

Antenna 1

Antenna 2

⋮

Antenna $N_k$

Antenna 1

Antenna 2

⋮

Antenna M

Network device

1. Perform widely linear processing on a received signal

2. Perform demapping processing on a signal obtained through the widely linear processing

FIG. 6

EP 4 513 776 A1

34

Signal transmission
method 300

| Network device | | Terminal device |
|---|---|---|

S301. Send first indication information,
where the first indication information is
for determining a mapping parameter

S302. Receive the first indication
information

S303. Map a first signal and a conjugate of
the first signal based on the determined
mapping parameter, to obtain a fifth signal

S304. Perform precoding processing on the
fifth signal to obtain a second signal

S305. Send the second signal

S306. Receive the
second signal

FIG. 7

First indication information

Terminal device 1

Terminal device $k$

Terminal device K

$b_k$

$b_{k,1}$

$b_{k,2}$

$b_{k,m_k}$

$s_{k,1}=\alpha_{1,k}b_{k,1}+\beta_{1,k}b_{k,1}{}^{*}$

$s_{k,2}=\alpha_{2,k}b_{k,2}+\beta_{2,k}b_{k,2}{}^{*}$

$s_{k,m_k}=\alpha_{m_k,k}b_{k,m_k}+\beta_{m_k,k}b_{k,m_k}{}^{*}$

$x_k = F_k s_k$

Antenna 1

Antenna 2

Antenna $N_k$

Antenna 1

Antenna 2

Antenna M

Network device

1. Perform linear processing on a received signal

2. Perform demapping processing on a signal obtained through the linear processing

FIG. 8

EP 4 513 776 A1

Signal transmission
method 400

| Network device | | Terminal device |

S401. Send first indication information,
where the first indication information is for
determining a widely linear processing
matrix

S402. Receive the first indication
information

S403. Perform widely linear processing on a
first signal and a conjugate of the first signal
based on the determined widely linear
processing matrix, to obtain a second signal

S404. Send the second signal

S405. Receive the
second signal

FIG. 9

First indication information

Terminal
device 1

$b_{k,1}$

Terminal
device $k$

$b_k$  $b_{k,2}$

$x_k = T_{1,k} b_k + T_{2,k} b_k^*$

Terminal
device K

$b_{k,m_k}$

Antenna
1

Antenna
2

Antenna
$N_k$

Antenna
1

Antenna
2

Antenna
M

Network device

Perform widely
linear processing
on a received
signal

FIG. 10

Communication apparatus 1100

1101

Communication
unit

1102

Processing unit

1103

Storage unit

FIG. 11

Communication apparatus 1200

1201

Processor

1203

Instructions

1202

Memory

1204

Instructions

1205

Transceiver

1206

Antenna

FIG. 12

1300

Chip

1303

Memory

1301

Processor

1302

Interface

FIG. 13

## INTERNATIONAL SEARCH REPORT

| | International application No. |
|---|---|
| | **PCT/CN2023/090608** |

**A. CLASSIFICATION OF SUBJECT MATTER**

H04B 7/0452(2017.01)i

According to International Patent Classification (IPC) or to both national classification and IPC

**B. FIELDS SEARCHED**

Minimum documentation searched (classification system followed by classification symbols)

IPC:H04B H04W

Documentation searched other than minimum documentation to the extent that such documents are included in the fields searched

Electronic data base consulted during the international search (name of data base and, where practicable, search terms used)

CNTXT; CNKI; WPABSC; ENTXTC; ENTXT; 3GPP: 指示, 配置, 映射, 宽线性, 矩阵, 共轭, 预编码, 幅度, 相位, 码本, 索引, indicate, configuration, map, lineal, matrix, conjugate, precoding, amplitude, phase, codebook, index

**C. DOCUMENTS CONSIDERED TO BE RELEVANT**

| Category* | Citation of document, with indication, where appropriate, of the relevant passages | Relevant to claim No. |
|---|---|---|
| A | CN 114070366 A (HUAWEI TECHNOLOGIES CO., LTD.) 18 February 2022 (2022-02-18) description, paragraphs 5-8 | 1-35 |
| A | CN 109417522 A (GUANGDONG OPPO MOBILE TELECOMMUNICATIONS CORP., LTD.) 01 March 2019 (2019-03-01) entire document | 1-35 |
| A | CN 110868245 A (TELECOMMUNICATIONS TECHNOLOGY RESEARCH INSTITUTE CO., LTD.) 06 March 2020 (2020-03-06) entire document | 1-35 |
| A | CN 112533295 A (HUAWEI TECHNOLOGIES CO., LTD.) 19 March 2021 (2021-03-19) entire document | 1-35 |
| A | US 2015341190 A1 (THALES SA.) 26 November 2015 (2015-11-26) entire document | 1-35 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 July 2023** | **03 August 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/090608**

| Patent document cited in search report | | | Publication date (day/month/year) | Patent family member(s) | | | Publication date (day/month/year) |
|---|---|---|---|---|---|---|---|
| CN | 114070366 | A | 18 February 2022 | WO | 2022022632 | A1 | 03 February 2022 |
|  |  |  |  | IN | 202327006500 | A | 17 February 2023 |
| CN | 109417522 | A | 01 March 2019 | KR | 20190061021 | A | 04 June 2019 |
|  |  |  |  | US | 2019123852 | A1 | 25 April 2019 |
|  |  |  |  | US | 10644830 | B2 | 05 May 2020 |
|  |  |  |  | EP | 3457648 | A1 | 20 March 2019 |
|  |  |  |  | EP | 3457648 | A4 | 24 July 2019 |
|  |  |  |  | WO | 2018058369 | A1 | 05 April 2018 |
|  |  |  |  | JP | 2019537286 | A | 19 December 2019 |
|  |  |  |  | JP | 6965335 | B2 | 10 November 2021 |
|  |  |  |  | TW | 201815113 | A | 16 April 2018 |
|  |  |  |  | TWI | 734828 | B | 01 August 2021 |
|  |  |  |  | IN | 201817047120 | A | 22 February 2019 |
|  |  |  |  | HK | 1262684 | A0 | 17 January 2020 |
|  |  |  |  | CN | 109417522 | B | 04 December 2020 |
|  |  |  |  | HK | 1262684 | A1 | 16 April 2021 |
| CN | 110868245 | A | 06 March 2020 | CN | 110868245 | B | 08 June 2021 |
| CN | 112533295 | A | 19 March 2021 | WO | 2020143577 | A1 | 16 July 2020 |
|  |  |  |  | CN | 111431679 | A | 17 July 2020 |
|  |  |  |  | IN | 202137033028 | A | 20 August 2021 |
|  |  |  |  | US | 2021337565 | A1 | 28 October 2021 |
|  |  |  |  | EP | 3907918 | A1 | 10 November 2021 |
|  |  |  |  | CN | 112533295 | B | 19 November 2021 |
|  |  |  |  | EP | 3907918 | A4 | 16 March 2022 |
| US | 2015341190 | A1 | 26 November 2015 | US | 9432223 | B2 | 30 August 2016 |
|  |  |  |  | FR | 3021471 | A1 | 27 November 2015 |
|  |  |  |  | FR | 3021471 | B1 | 22 December 2017 |
|  |  |  |  | EP | 2947799 | A1 | 25 November 2015 |
|  |  |  |  | EP | 2947799 | B1 | 05 December 2018 |
|  |  |  |  | SG | 10201504083 | RA | 30 December 2015 |

Form PCT/ISA/210 (patent family annex) (July 2022)

**REFERENCES CITED IN THE DESCRIPTION**

**Patent documents cited in the description**

- CN 202210514645